# EUROPEAN PATENT APPLICATION

(11) **EP 3 493 634 A1**
(43) Date of publication of application: **05.06.2019**
(21) Application number: 16913749.4
(22) Date of filing: 23.08.2016
(51) Int. Cl.: H04W 72/12

(54) **SERVICE ESTABLISHMENT METHOD AND DEVICE**

(71) Applicant: Huawei Technologies Co., Ltd., Longgang District Shenzhen, Guangdong 518129 (CN)
(72) Inventor: CHONG, Weiwei, Shenzhen Guangdong 518129 (CN); WU, Xiaobo, Shenzhen Guangdong 518129 (CN)
(74) Representative: Maiwald Patent- und Rechtsanwaltsgesellschaft mbH
(86) International application number: PCT/CN2016/096442
(87) International publication number: WO 2018/035725

(57) **Abstract**

Embodiments of this application relate to the field of communications technologies, and disclose a service establishment method and a device to resolve a problem that a service cannot be normally executed if a radio resource is forcibly allocated to UE after a service establishment request is received. A specific solution is as follows: An access network device receives a first establishment request sent by a core network device or a service application server, where the first establishment request carries a service requirement of a to-be-established service; and when determining that radio channel quality of a first cell of a first network in which the UE is located does not meet the service requirement of the to-be-established service, the access network device sends a first establishment response to the core network device or the service application server, where the first establishment response is used to notify the core network device or the service application server that the radio channel quality of the first cell does not meet the service requirement of the to-be-established service; or the access network device hands over the UE to a second cell of the first network; or the access network device hands over the UE to a third cell of a second network. This application is used in a service establishment process.

## Description

### TECHNICAL FIELD

This application relates to the field of communications technology, and in particular, to a service establishment method and a device.

### BACKGROUND

A voice service in a Long Term Evolution (English: Long Term Evolution, LTE for short) network is referred to as a voice over Long Term Evolution network (English: Voice over LTE, VoLTE for short) service. Currently, more operators start to commercialize VoLTE, and more user equipments (English: User Equipment, UE for short) can support the VoLTE service.

However, in the prior art, when UE is located in a weak coverage area of the LTE network, normal execution of the VoLTE service cannot be ensured, or a problem of poor user experience is caused during execution of the VoLTE service.

### SUMMARY

Embodiments of this application provide a service establishment method and a device to resolve a problem that a service cannot be normally executed or poor user experience is caused during service execution if a radio resource is forcibly allocated to UE after a service establishment request is received.

A first aspect provides a service establishment method, including: receiving, by an access network device, a first establishment request sent by a core network device or a service application server, where the first establishment request carries a service requirement of a to-be-established service, and the service requirement of the to-be-established service is used to indicate, to the access network device, radio channel quality required by UE for executing the to-be-established service; and when the access network device determines that radio channel quality of a first cell of a first network in which the UE is located does not meet the service requirement of the to-be-established service, sending, by the access network device, a first establishment response to the core network device or the service application server, where the first establishment response is used to notify the core network device or the service application server that the radio channel quality of the first cell does not meet the service requirement of the to-be-established service; or handing over the UE to a second cell of the first network; or handing over the UE to a third cell of a second network.

In the technical solution of this embodiment, in a process of establishing the service for the UE, the service application server may deliver corresponding service requirement information to the access network device based on the service requirement and a real-time status. Correspondingly, the access network device may use the received service requirement information as an admission threshold for service establishment. To be specific, when radio signal quality of the cell in which the UE is located does not meet the service requirement, the access network device notifies the service application server, so that the service application server makes a corresponding adjustment; or the access network device may hand over the UE to another cell that can meet the service requirement, so that the service is established in the another cell. In this solution, the access network device may use the service requirement of the to-be-established service, sent by the service application server, as the admission threshold for service establishment. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold (that is, a scenario in which the radio channel quality of the first cell does not meet the service requirement of the to-be-established service), for example, in a weak coverage area of network signals, a network side may adjust the service requirement or hand over the UE to another cell based on an actual network status. Therefore, after the service is established, normal execution of the service can be ensured, and user experience brought by execution of the service is improved.

In a possible implementation, the service application server may instruct, by using instruction information (such as first instruction information) included in the service requirement of the to-be-established service, the access network device to send the first establishment response to the core network device or the service application server when the radio channel quality of the first cell does not meet the service requirement of the to-be-established service. Specifically, the sending, by the access network device, a first establishment response to the core network device or the service application server may include: if the access network device determines that the service requirement of the to-be-established service includes first instruction information, sending the first establishment response to the core network device or the service application server, where the first instruction information is used to instruct the access network device to send the first establishment response to the core network device or the service application server when the radio channel quality of the first cell does not meet the service requirement of the to-be-established service.

In a possible implementation, the service application server may instruct, by using instruction information (such as second instruction information) included in the service requirement of the to-be-established service, the access network device to hand over the UE to the second cell when the radio channel quality of the first cell does not meet the service requirement of the to-be-established service. Specifically, the handing over, by the access network device, the UE to a second cell of the first network may include: if the access network device determines that the service requirement of the to-be-established service includes second instruction information and the access network device determines that the second cell whose radio channel quality meets the service requirement of the to-be-established service exists, handing over, by the access network device, the UE to the second cell, where the second instruction information is used to instruct the access network device to hand over the UE to the second cell when the radio channel quality of the first cell does not meet the service requirement of the to-be-established service.

In a possible implementation, the service application server may instruct, by using instruction information (such as third instruction information) included in the service requirement of the to-be-established service, the access network device to hand over the UE to the third cell when the radio channel quality of the first cell does not meet the service requirement of the to-be-established service. The handing over, by the access network device, the UE to a third cell of a second network may include: if the access network device determines that the service requirement of the to-be-established service includes third instruction information and the access network device determines that the third cell whose radio channel quality meets the service requirement of the to-be-established service exists, handing over, by the access network device, the UE to the third cell, where the third instruction information is used to instruct the access network device to hand over the UE to the third cell when the radio channel quality of the first cell does not meet the service requirement of the to-be-established service.

In this solution, based on an instruction of the instruction information included in the service requirement of the to-be-established service, when the radio channel quality of the first cell does not meet the service requirement of the to-be-established service, the access network device may send the first establishment response to the core network device or the service application server, hand over the UE to the second cell, or hand over the UE to the third cell.

In a possible implementation, the second cell or the third cell whose radio channel quality meets the service requirement of the to-be-established service may not exist. In this case, the method in this embodiment of this application may further include: if the access network device determines that the second cell or the third cell whose radio channel quality meets the service requirement of the to-be-established service does not exist, sending, by the access network device, a second establishment response to the core network device or the service application server, where the second establishment response is used to notify the core network device or the service application server that the radio channel quality of the first cell does not meet the service requirement of the to-be-established service and that the second cell or the third cell whose radio channel quality meets the service requirement of the to-be-established service does not exist. Therefore, when the second cell or the third cell whose radio channel quality meets the service requirement of the to-be-established service does not exist, the access network device may send the second establishment response to the service application server to indicate that the radio channel quality of the first cell does not meet the service requirement of the to-be-established service and that the second cell or the third cell whose radio channel quality meets the service requirement of the to-be-established service does not exist, so that the service application server can adjust the service requirement of the to-be-established service based on an actual network status.

In a possible implementation, both the first establishment response and the second establishment response carry at least one of the radio channel quality of the first cell, terminal type information of the UE, information about a carrier frequency accessed by the UE, location information of the UE, load information of the first cell, radio access technology (English: Radio Access Technology, RAT for short) information of the first network, and bandwidth information of the to-be-established service. It may be figured out that, the information carried in the first establishment response and the second establishment response may be used by the service application server to redetermine a service requirement of the to-be-established service, that is, an updated service requirement of the to-be-established service.

In a possible implementation, the location information of the UE includes at least one of a cell identity of the UE, a base station identity of the UE, a tracking area identity (English: Tracking Area Identity, TAI for short) of the UE, a location area identity (English: Location Area Identity, LAI for short) of the UE, and a routing area identity (English: Routing Area Identity, RAI for short) of the UE.

In a possible implementation, after receiving the first establishment response or the second establishment response used to indicate that the radio channel quality of the first cell does not meet the service requirement of the to-be-established service, the service application server may modify the service requirement of the to-be-established service to obtain an updated service requirement of the to-be-established service, and then re-initiate a service establishment request to the access network device. Specifically, after the sending, by the access network device, the first establishment response or the second establishment response to the core network device or the service application server, the method in this embodiment of this application may further include: receiving, by the access network device, a second establishment request sent by the core network device or the service application server, where the second establishment request carries an updated service requirement of the to-be-established service. The access network device may receive the second establishment request sent by the service application server and used to request to re-establish the to-be-established service, where the updated service requirement of the to-be-established service that is carried in the second establishment request may be determined by the service application server based on the information carried in the first establishment response or the second establishment response.

In a possible implementation, the access network device may determine, by sending a policy control command to the UE, whether the second cell or the third cell whose radio channel quality meets the service requirement of the to-be-established service exists. In this embodiment of this application, a fourth cell is used to represent the second cell or the third cell, and a method for determining, by the access network device, whether the second cell or the third cell whose radio channel quality meets the service requirement of the to-be-established service exists is described herein. Specifically, the access network device may determine, in the following two manners, that the fourth cell whose radio channel quality meets the service requirement of the to-be-established service exists. In a first manner, the access network device delivers a measurement control command to the UE, where the measurement control command is used to instruct the UE to measure the radio channel quality of the fourth cell; the access network device receives a measurement report reported by the UE, where the measurement report carries a measurement result obtained by the UE by measuring the radio channel quality of the fourth cell; and the access network device determines, based on the measurement result, that the fourth cell whose radio channel quality meets the service requirement of the to-be-established service exists. In a second manner, the access network device delivers a measurement control command to the UE, where the measurement control command carries a measurement reporting condition determined based on the service requirement of the to-be-established service, the measurement control command is used to instruct the UE to measure the radio channel quality of the fourth cell, and the measurement reporting condition is used to instruct the UE to report a measurement report to the access network device when the UE determines that the radio channel quality of the fourth cell meets the measurement reporting condition; and if the access network device receives the measurement report reported by the UE, the access network device determines that the fourth cell whose radio channel quality meets the service requirement of the to-be-established service exists.

In a possible implementation, the service requirement of the to-be-established service includes at least one of service type indication information of the to-be-established service, a radio channel requirement of the to-be-established service, coding information of the to-be-established service, a coding information list of the UE, and a terminal type of the UE, where the coding information list of the UE includes coding information supported by both the UE and the service application server. It may be figured out that, the UE may support at least two types of coding information, where each type of coding information corresponds to a coding type and a coding rate set.

In a possible implementation, the radio channel requirement of the to-be-established service includes any one of a reference signal received power (English: Reference Signal Receiving Power, RSRP for short) requirement, a reference signal received quality (English: Reference Signal Receiving Quality, RSRQ for short) requirement, and a signal to interference plus noise ratio (English: Signal to Interference plus Noise Ratio, SINR for short) requirement.

In a possible implementation, the coding information of the to-be-established service includes coding type information of the to-be-established service and coding rate set information of the to-be-established service.

In a possible implementation, the radio channel quality includes at least one of RSRP, RSRQ, and an SINR.

In a possible implementation, the terminal type information of the UE includes at least one of an international mobile equipment identity (English: International Mobile Equipment Identity, IMEI for short) of the UE, a type approval code (English: Type Approval Code, TAC for short) of the IMEI, and an international mobile subscriber identity (English: International Mobile Subscriber Identification Number, IMSI for short) of the UE.

In a possible implementation, the first network may be a fifth generation mobile communications technology (English: The Fifth Generation wireless telephone technology, 5G for short) network or a fourth generation mobile communications technology (English: The Fourth Generation wireless telephone technology, 4G for short) network; and the second network may be any one of the 4G network, a third generation mobile communications technology (English: The Third Generation wireless telephone technology, 3G for short) network, and a second generation mobile communications technology (English: The Second Generation wireless telephone technology, 2G for short) network.

In a possible implementation, a method for determining, by the access network device, that radio channel quality of a first cell of a first network in which the UE is located does not meet the service requirement of the to-be-established service may include: determining, by the access network device, that the radio channel quality of the first cell meets radio channel quality required by at least one type of coding information in the coding information list of the UE, but the radio channel quality of the first cell does not meet radio channel quality required by the coding information of the to-be-established service.

A second aspect provides a service establishment method, including: sending, by a service application server, a first establishment request to an access network device or a core network device, where the first establishment request carries a service requirement of a to-be-established service, and the service requirement of the to-be-established service is used to indicate, to the access network device or the core network device, radio channel quality required by user equipment UE for executing the to-be-established service; and receiving, by the service application server, a first establishment response sent by the access network device or the core network device, where the first establishment response is used to notify the service application server that radio channel quality of a first cell of a first network in which the UE is located does not meet the service requirement of the to-be-established service; or receiving, by the service application server, a second establishment response sent by the access network device or the core network device, where the second establishment response is used to notify the service application server that radio channel quality of a first cell of a first network in which the UE is located does not meet the service requirement of the to-be-established service and that a second cell or a third cell whose radio channel quality meets the service requirement of the to-be-established service does not exist, where the second cell is located in the first network, and the third cell is located in a second network.

The first establishment request sent by the service application server to the access network device carries the service requirement of the to-be-established service. The access network device may use the received service requirement information as an admission threshold for service establishment. To be specific, when radio signal quality of the cell in which the UE is located does not meet the service requirement, the access network device notifies the service application server, so that the service application server makes a corresponding adjustment; or the access network device may hand over the UE to another cell that can meet the service requirement, so that the service is established in the another cell. In this solution, the access network device may use the service requirement of the to-be-established service, sent by the service application server, as the admission threshold for service establishment. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold (that is, a scenario in which the radio channel quality of the first cell does not meet the service requirement of the to-be-established service), for example, in a weak coverage area of network signals, a network side may adjust the service requirement or hand over the UE to another cell based on an actual network status. Therefore, after the service is established, normal execution of the service can be ensured, and user experience brought by execution of the service is improved.

In a possible implementation, the service application server may determine the service requirement of the to-be-established service before sending the first establishment request to the access network device. Specifically, the service application server may determine the service requirement of the to-be-established service in the following manner. In a first manner, the service application server determines the service requirement of the to-be-established service based on at least one of a mean opinion score (English: Mean Opinion Score, MOS for short) requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; and In a second manner, the service application server sends a first query request to a third-party network device, where the first query request carries at least one of a MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; and the service application server receives a first query response sent by the third-party network device, where the first query response carries the service requirement of the to-be-established service.

In a possible implementation, before determining the service requirement of the to-be-established service, the service application server may further first obtain related information used to determine the service requirement of the to-be-established service, for example, at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service. Specifically, before the determining, by the service application server, the service requirement of the to-be-established service, or the receiving, by the service application server, a first query response sent by the third-party network device, the method in this embodiment of this application may further include: sending, by the service application server, a second query request to the core network device or the UE or the access network device; and receiving, by the service application server, a second query response sent by the core network device or the UE or the access network device, where the second query response carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

In a possible implementation, the service application server may further obtain, in the following manner, related information used to determine the service requirement of the to-be-established service. Specifically, before the determining, by the service application server, the service requirement of the to-be-established service, or the receiving, by the service application server, a first query response sent by the third-party network device, the method in this embodiment of this application may further include: receiving, by the service application server, a first message sent by the UE, where the first message carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

In a possible implementation, after receiving the first establishment response or the second establishment response, the service application server may determine an updated service requirement of the to-be-established service based on the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, the bandwidth information of the to-be-established service, and a coding information list of the UE that are carried in the first establishment response or the second establishment response, where the coding information list of the UE includes coding information supported by both the UE and the service application server. Alternatively, the service application server may send a third query request to the third-party network device, where the third query request carries the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, the bandwidth information of the to-be-established service, and a coding information list of the UE that are carried in the first establishment response or the second establishment response, where the coding information list of the UE includes coding information supported by both the UE and the service application server; and the service application server receives a third query response sent by the third-party network device, where the first query response carries an updated service requirement of the to-be-established service.

In a possible implementation, after the determining, by the service application server, an updated service requirement of the to-be-established service, or receiving a third query response sent by the third-party network device, the method in this embodiment of this application may further include: sending, by the service application server, a second establishment request to the access network device or the core network device, where the second establishment request carries the updated service requirement of the to-be-established service.

In a possible implementation, after the receiving, by the service application server, the first establishment response or the second establishment response sent by the access network device, the method in this embodiment of this application may further include: determining, by the service application server, to terminate the to-be-established service, based on at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service that are carried in the first establishment response or the second establishment response; and sending, by the service application server, a message for deleting the to-be-established service to the UE, where the message for deleting the to-be-established service is used to instruct the UE to terminate the to-be-established service.

In a possible implementation, the service application server may send the first establishment request to the access network device in the following manner. In a first manner, the service application server delivers the first establishment request to the access network device by using the core network device. In a second manner, the service application server delivers the first establishment request to the access network device by using an interface between the service application server and the access network device.

In a possible implementation, updated coding information of the to-be-established service that is included in the updated service requirement of the to-be-established service is second coding information. The method in this embodiment of this application may further include: determining, by the service application server, that the coding information of the to-be-established service is first coding information; determining, by the service application server, that the updated coding information of the to-be-established service is the second coding information; and converting, by the service application server, the coding information of the to-be-established service from the first coding information to the second coding information.

In a possible implementation, the service application server sends a second message to the UE, where the second message is used to indicate that the coding information of the to-be-established service is converted from the first coding information to the second coding information.

In a possible implementation, when determining that a radio channel requirement corresponding to the first coding information is higher than a radio channel requirement corresponding to the second coding information, the service application server may further convert the coding information of the to-be-established service from the first coding information to the second coding information.

It should be noted that, for detailed descriptions of the service requirement of the to-be-established service, the updated service requirement of the to-be-established service, the radio channel requirement of the to-be-established service, the coding information of the to-be-established service, the radio channel quality, the terminal type information of the UE, the first network, the second network, first instruction information, second instruction information, third instruction information, the first establishment response, the second establishment response, and the information carried in the first establishment response and the second establishment response in the second aspect and various possible implementations thereof in this embodiment of this application, reference may be made to related descriptions in the possible implementations of the first aspect in the embodiment of this application. Details are not described again herein in this embodiment of this application.

A third aspect further provides an access network device, including a receiving module, a determining module, a sending module, and a handover module, where the receiving module is configured to receive a first establishment request sent by a core network device or a service application server, where the first establishment request carries a service requirement of a to-be-established service, and the service requirement of the to-be-established service is used to indicate, to the access network device, radio channel quality required by UE for executing the to-be-established service; the determining module is configured to determine whether radio channel quality of a first cell of a first network in which the UE is located meets the service requirement of the to-be-established service; and the sending module is configured to send a first establishment response to the core network device or the service application server when the determining module determines that the radio channel quality of the first cell does not meet the service requirement of the to-be-established service, where the first establishment response is used to notify the core network device or the service application server that the radio channel quality of the first cell does not meet the service requirement of the to-be-established service; or the handover module is configured to: when the determining module determines that the radio channel quality of the first cell does not meet the service requirement of the to-be-established service, hand over the UE to a second cell of the first network, or hand over the UE to a third cell of a second network.

In a possible implementation, the determining module is further configured to determine whether the service requirement of the to-be-established service includes first instruction information; and the sending module is specifically configured to send the first establishment response to the core network device or the service application server if the determining module determines that the service requirement of the to-be-established service includes the first instruction information, where the first instruction information is used to instruct the access network device to send the first establishment response to the core network device or the service application server when the radio channel quality of the first cell does not meet the service requirement of the to-be-established service.

In a possible implementation, the determining module is further configured to determine whether the service requirement of the to-be-established service includes second instruction information, and determine whether the second cell whose radio channel quality meets the service requirement of the to-be-established service exists; and the handover module is specifically configured to hand over the UE to the second cell if the determining module determines that the service requirement of the to-be-established service includes the second instruction information and the determining module determines that the second cell whose radio channel quality meets the service requirement of the to-be-established service exists, where the second instruction information is used to instruct the access network device to hand over the UE to the second cell when the radio channel quality of the first cell does not meet the service requirement of the to-be-established service.

In a possible implementation, the determining module is further configured to determine whether the service requirement of the to-be-established service includes third instruction information, and determine whether the third cell whose radio channel quality meets the service requirement of the to-be-established service exists; and the handover module is specifically configured to hand over the UE to the third cell if the determining module determines that the service requirement of the to-be-established service includes the third instruction information and the determining module determines that the third cell whose radio channel quality meets the service requirement of the to-be-established service exists, where the third instruction information is used to instruct the access network device to hand over the UE to the third cell when the radio channel quality of the first cell does not meet the service requirement of the to-be-established service.

In a possible implementation, the sending module is further configured to send a second establishment response to the core network device or the service application server if the determining module determines that the second cell or the third cell whose radio channel quality meets the service requirement of the to-be-established service does not exist, where the second establishment response is used to notify the core network device or the service application server that the radio channel quality of the first cell does not meet the service requirement of the to-be-established service and that the second cell or the third cell whose radio channel quality meets the service requirement of the to-be-established service does not exist.

In a possible implementation, after the sending module sends the first establishment response or the second establishment response to the core network device or the service application server, the receiving module is further configured to receive a second establishment request sent by the core network device or the service application server, where the second establishment request carries an updated service requirement of the to-be-established service.

In a possible implementation, a fourth cell is the second cell or the third cell. The determining module is specifically configured to: deliver a measurement control command to the UE, where the measurement control command is used to instruct the UE to measure radio channel quality of the fourth cell; receive a measurement report reported by the UE, where the measurement report carries a measurement result obtained by the UE by measuring the radio channel quality of the fourth cell; and determine, based on the measurement result, that the fourth cell whose radio channel quality meets the service requirement of the to-be-established service exists. Alternatively, the determining module is specifically configured to: deliver a measurement control command to the UE, where the measurement control command carries a measurement reporting condition determined based on the service requirement of the to-be-established service, the measurement control command is used to instruct the UE to measure radio channel quality of the fourth cell, and the measurement reporting condition is used to instruct the UE to report a measurement report to the access network device when the UE determines that the radio channel quality of the fourth cell meets the measurement reporting condition; and if the measurement report reported by the UE is received, determine that the fourth cell whose radio channel quality meets the service requirement of the to-be-established service exists.

In a possible implementation, that the determining module is configured to determine that the radio channel quality of the first cell of the first network in which the UE is located does not meet the service requirement of the to-be-established service is specifically: the determining module is configured to determine that the radio channel quality of the first cell meets radio channel quality required by at least one type of coding information in a coding information list of the UE, but the radio channel quality of the first cell does not meet radio channel quality required by coding information of the to-be-established service.

It should be noted that, for detailed descriptions of the service requirement of the to-be-established service, the updated service requirement of the to-be-established service, the radio channel requirement of the to-be-established service, the coding information of the to-be-established service, the radio channel quality, terminal type information of the UE, the first network, the second network, first instruction information, second instruction information, third instruction information, the first establishment response, the second establishment response, and the information carried in the first establishment response and the second establishment response in the third aspect and various possible implementations thereof in this embodiment of this application, reference may be made to related descriptions in the possible implementations of the first aspect in the embodiment of this application. Details are not described again herein in this embodiment of this application.

A fourth aspect provides an access network device, including one or more processors, a memory, a bus system, a receiver, a transmitter, and one or more application programs, where the one or more processors, the memory, the receiver, and the transmitter are interconnected by the bus system; and the one or more application programs are stored in the memory, the one or more application programs include an instruction, and when the processor of the access network device executes the instruction, the access network device performs the service establishment method in the first aspect and various possible implementations thereof.

A fifth aspect provides a computer-readable storage medium, where the computer-readable storage medium stores one or more programs, the one or more programs include an instruction, and when a processor of an access network device executes the instruction, the access network device performs the service establishment method in the first aspect and various possible implementations thereof.

It should be noted that each functional module in the access network device in the third aspect, the fourth aspect, and various possible implementations thereof in this embodiment of this application is intended to implement the service establishment method in the first aspect and various possible implementations thereof. For detailed descriptions of functions implemented by the functional modules that are obtained by performing functional division on the access network device, and analysis of effects of the functions in the third aspect, the fourth aspect, and various possible implementations thereof, refer to detailed descriptions in the first aspect and various possible implementations thereof. Details are not described again herein in this embodiment of this application.

A sixth aspect provides a service application server, including a sending module and a receiving module, where the sending module is configured to send a first establishment request to an access network device or a core network device, where the first establishment request carries a service requirement of a to-be-established service, and the service requirement of the to-be-established service is used to indicate, to the access network device or the core network device, radio channel quality required by UE for executing the to-be-established service; and the receiving module is configured to receive a first establishment response sent by the access network device or the core network device, where the first establishment response is used to notify the service application server that radio channel quality of a first cell of a first network in which the UE is located does not meet the service requirement of the to-be-established service; or the receiving module is configured to receive a second establishment response sent by the access network device or the core network device, where the second establishment response is used to notify the service application server that radio channel quality of a first cell of a first network in which the UE is located does not meet the service requirement of the to-be-established service and that a second cell or a third cell whose radio channel quality meets the service requirement of the to-be-established service does not exist, where the second cell is located in the first network, and the third cell is located in a second network.

In a possible implementation, the service application server may further include a determining module, where the determining module is configured to determine, before the sending module sends the first establishment request to the access network device, the service requirement of the to-be-established service based on at least one of a MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; or the determining module is configured to send a first query request to a third-party network device before the sending module sends the first establishment request to the access network device, where the first query request carries at least one of a MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; and receive a first query response sent by the third-party network device, where the first query response carries the service requirement of the to-be-established service.

In a possible implementation, the sending module is further configured to send a second query request to the core network device or the UE or the access network device before the determining module determines the service requirement of the to-be-established service; and the receiving module is further configured to receive a second query response sent by the core network device or the UE or the access network device, where the second query response carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

In a possible implementation, before the determining module determines the service requirement of the to-be-established service, the sending module is further configured to receive a first message sent by the UE, where the first message carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

In a possible implementation, after the receiving module receives the first establishment response or the second establishment response sent by the access network device, the determining module is further configured to determine an updated service requirement of the to-be-established service based on the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, where the coding information list of the UE includes coding information supported by both the UE and the service application server; or after the receiving module receives the first establishment response or the second establishment response sent by the access network device, the determining module is further configured to send a third query request to the third-party network device, where the third query request carries the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, where the coding information list of the UE includes coding information supported by both the UE and the service application server; and receive a third query response sent by the third-party network device, where the first query response carries an updated service requirement of the to-be-established service.

In a possible implementation, the sending module is further configured to send a second establishment request to the access network device or the core network device after the determining module determines the updated service requirement of the to-be-established service, where the second establishment request carries the updated service requirement of the to-be-established service that is determined by the determining module.

In a possible implementation, after the receiving module receives the first establishment response or the second establishment response sent by the access network device, the determining module is further configured to determine to terminate the to-be-established service, based on at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service that are carried in the first establishment response or the second establishment response; and the sending module is further configured to send a message for deleting the to-be-established service to the UE, where the message for deleting the to-be-established service is used to instruct the UE to terminate the to-be-established service.

In a possible implementation, the sending module is specifically configured to: deliver the first establishment request to the access network device by using the core network device; or deliver the first establishment request to the access network device by using an interface between the service application server and the access network device.

In a possible implementation, updated coding information of the to-be-established service that is included in the updated service requirement of the to-be-established service is second coding information; the determining module is further configured to determine that the coding information of the to-be-established service is first coding information, and determine that the updated coding information of the to-be-established service is the second coding information; and the service application server may further include a conversion module, where the conversion module is configured to convert the coding information of the to-be-established service from the first coding information to the second coding information.

In a possible implementation, the sending module is further configured to send a second message to the UE, where the second message is used to indicate that the coding information of the to-be-established service is converted from the first coding information to the second coding information.

In a possible implementation, the determining module is further configured to determine that a radio channel requirement corresponding to the first coding information is higher than a radio channel requirement corresponding to the second coding information.

It should be noted that, for detailed descriptions of the service requirement of the to-be-established service, the updated service requirement of the to-be-established service, the radio channel requirement of the to-be-established service, the coding information of the to-be-established service, the radio channel quality, the terminal type information of the UE, the first network, the second network, first instruction information, second instruction information, third instruction information, the first establishment response, the second establishment response, and the information carried in the first establishment response and the second establishment response in the sixth aspect and various possible implementations thereof in this embodiment of this application, reference may be made to related descriptions in the possible implementations of the first aspect in the embodiment of this application. Details are not described again herein in this embodiment of this application.

A seventh aspect provides a service application server, including one or more processors, a memory, a bus system, a receiver, a transmitter, and one or more application programs, where the one or more processors, the memory, the receiver, and the transmitter are interconnected by the bus system; and the one or more application programs are stored in the memory, the one or more application programs include an instruction, and when the processor of the service application server executes the instruction, the service application server performs the service establishment method in the second aspect and various possible implementations thereof.

An eighth aspect provides a computer-readable storage medium, where the computer-readable storage medium stores one or more programs, the one or more programs include an instruction, and when a processor of the service application server executes the instruction, the service application server performs the service establishment method in the second aspect and various possible implementations thereof.

It should be noted that each functional module in the service application server in the sixth aspect, the seventh aspect, and various possible implementations thereof in this embodiment of this application is intended to implement the service establishment method in the second aspect and various possible implementations thereof. For detailed descriptions of functions implemented by the functional modules that are obtained by performing functional division on the service application server, and analysis of effects of the functions in the sixth aspect, the seventh aspect, and various possible implementations thereof, refer to detailed descriptions in the second aspect and various possible implementations thereof. Details are not described again herein in this embodiment of this application.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may derive other drawings from these accompanying drawings without creative efforts.
FIG. 1 is a schematic diagram of an architecture of a communications network according to an embodiment of this application;
FIG. 2 is a schematic diagram of an architecture of another communications network according to an embodiment of this application;
FIG. 3 is a flowchart of a service establishment method according to an embodiment of this application;
FIG. 4 is a flowchart of another service establishment method according to an embodiment of this application;
FIG. 5A and FIG. 5B are a flowchart of another service establishment method according to an embodiment of this application;
FIG. 6A and FIG. 6B are a flowchart of another service establishment method according to an embodiment of this application;
FIG. 7A and FIG. 7B are a flowchart of another service establishment method according to an embodiment of this application;
FIG. 8 is a flowchart of another service establishment method according to an embodiment of this application;
FIG. 9 is a flowchart of another service establishment method according to an embodiment of this application;
FIG. 10A and FIG. 10B are a flowchart of another service establishment method according to an embodiment of this application;
FIG. 11A and FIG. 11B are a flowchart of another service establishment method according to an embodiment of this application;
FIG. 12 is a schematic structural composition diagram of an access network device according to an embodiment of this application;
FIG. 13 is a schematic structural composition diagram of another access network device according to an embodiment of this application;
FIG. 14 is a schematic structural composition diagram of a service application server according to an embodiment of this application;
FIG. 15 is a schematic structural composition diagram of another service application server according to an embodiment of this application; and
FIG. 16 is a schematic structural composition diagram of another service application server according to an embodiment of this application.

### DESCRIPTION OF EMBODIMENTS

In the specification, claims, and accompanying drawings of this application, the terms "first", "second", and so on are intended to distinguish between different objects but do not indicate a particular order. In addition, the terms "including", "having", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The technical solutions of this application may be applied to a 2G network, a 3G network, a 4G network, and a 5G network. The technical solutions of this application are not only applicable to a VoLTE service and a video call service, but also applicable to other services having similar requirements on network signal coverage. A service type of user equipment and a network in which the user equipment is located are not limited in this application.

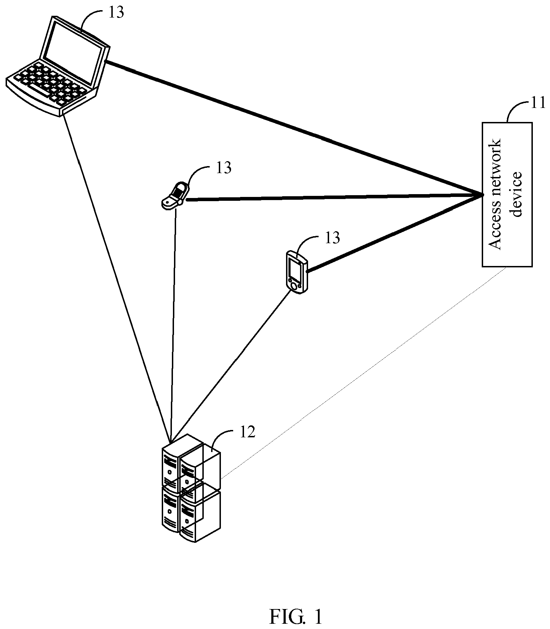

FIG. 1 is a schematic diagram of an architecture of a communications network according to an embodiment of this application. As shown in FIG. 1, the communications network may include an access network device 11, a service application server 12, and at least one UE 13. The access network device 11 and the UE 13 may be connected by using a radio communications link. The service application server 12 is responsible for processing a service registration request of the UE, user management, session control, service switching, service control, and the like. A core network device 14 may exist between the access network device 11 and the service application server 12, and is responsible for connecting a service between the UE 13 and the service application server 12.

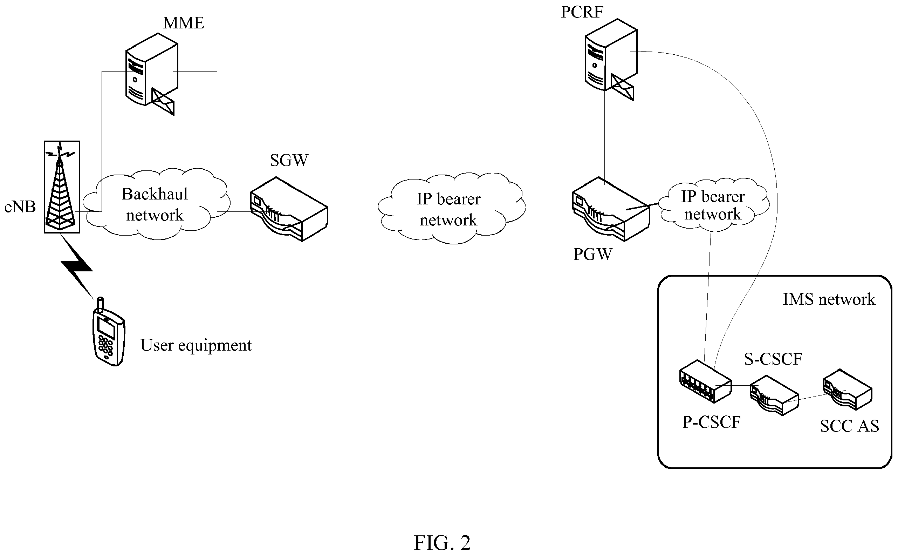

FIG. 2 shows a practical example of a 4G network to which the architecture of the communications network shown in FIG. 1 is specifically applied. An evolved NodeB (English: Evolved NodeB, eNB for short) in FIG. 2 serves as the access network device in FIG. 1, and the eNB and UE (that is, the UE 13 in FIG. 1) may be connected by a radio communications link. A core network device of an LTE network in the architecture shown in FIG. 2 may include a mobility management entity (English: Mobility Management Entity, MME for short), a serving gateway (English: Serving Gateway, SGW for short), a packet data network gateway (English: PDN Gateway, PGW for short), a policy and charging rules function (English: Policy and Charging Rules Function, PCRF for short) entity, and the like. The core network device may be responsible for connecting a service such as a VoLTE service of the UE to an Internet Protocol multimedia subsystem (English: IP Multimedia Subsystem, IMS for short) network, and responsible for transmitting signaling related to a VoLTE call between the UE and the IMS network. In addition, the core network device may be further responsible for establishing a dedicated bearer (for example, a quality of service class identifier (English: QoS Class Identifier, QCI for short) = 1) related to the core network device, where the dedicated bearer is used to transmit user plane data (media data) related to the VoLTE service.

An IMS network device shown in FIG. 2, for example, a proxy call session control function (English: Proxy Call Session Control Function, P-CSCF for short) entity, an interrogating/serving call session control function (English: Interrogating/Serving Call Session Control Function, S-CSCF for short) entity, or a service centralization and continuity application server (English: Service centralization and continuity application server, SCC AS for short) may serve as any service application server in the embodiments of this application.

The P-CSCF entity (which may include an originating P-CSCF entity and a terminating P-CSCF entity) is a first touch point at which the UE accesses the IMS network in a process of a service such as VoLTE. The P-CSCF entity may act as a proxy to process signaling related to the service such as VoLTE and implement routing control. The S-CSCF entity (which may include an originating S-CSCF entity and a terminating S-CSCF entity) is a service switching center of the IMS network. The S-CSCF entity may be mainly responsible for receiving and processing a service registration request of the UE, user management, session control, service switching, service control, Session Initiation Protocol (English: Session Initiation Protocol, SIP for short) message processing, charging, and the like. The SCC AS (which may include an originating SCC AS and a terminating SCC AS) is configured to keep service continuity for the UE when the UE moves between the LTE network and another network.

The UE in the embodiments of this application may be a wireless terminal or a wired terminal. For example, the UE may be a mobile phone, a computer, a tablet computer, a personal digital assistant (English: personal digital assistant, PDA for short), a mobile Internet device (English: mobile Internet device, MID for short), a wearable device, an e-book reader (English: e-book reader), or the like.

Some technical solutions in the embodiments of this application may be specifically implemented based on the architecture of the communications network shown in FIG. 1 or other variations thereof.

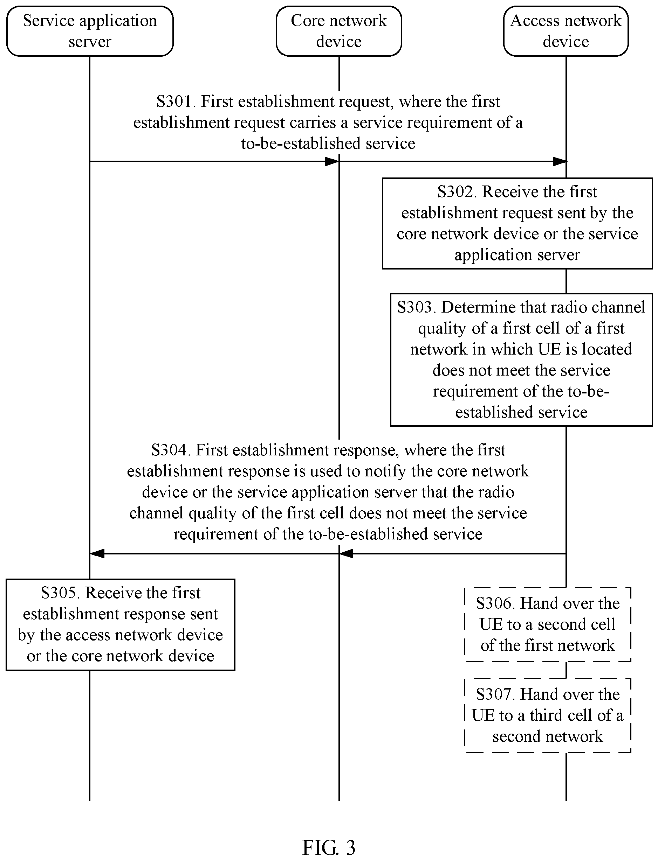

An embodiment of this application provides a service establishment method. As shown in FIG. 3, the service establishment method includes the following steps.

S301. A service application server sends a first establishment request to an access network device or a core network device, where the first establishment request carries a service requirement of a to-be-established service.

The service requirement of the to-be-established service is used to indicate, to the access network device or the core network device, radio channel quality required by UE for executing the to-be-established service.

It should be noted that the service application server in this embodiment of this application is any one or integration of at least two of service application servers of an IMS network, for example, a P-CSCF, an ATCF, an S-CSCF, and an SCC AS.

It may be figured out that, the first establishment request may be delivered by the service application server to the access network device after the service application server receives a request message for establishing the to-be-established service for the UE. The to-be-established service may be a VoLTE service, a video service, or a service of another service type.

For example, the to-be-established service is the VoLTE service. The service application server (for example, the P-CSCF, the ATCF, the S-CSCF, or the SCC AS) may send a service establishment request message (that is, the first establishment request) to the access network device (for example, an eNB) after receiving an invite (English: invite) message for establishing the VoLTE service for the UE, where the first establishment request is used to request the access network device (for example, the eNB) to allocate a radio network resource to the VoLTE service. The UE may be calling UE, and the service application server is correspondingly an originating service application server; or the UE may be called UE, and in this case, the service application server is correspondingly a terminating service application server.

For example, the service application server may send the first establishment request to the access network device in either of the following two implementations.

In a first manner, the service application server delivers the first establishment request to the access network device by using the core network device.

For example, using the VoLTE service as an example, after the service application server receives the invite (English: invite) message for establishing the VoLTE service for the UE, the service application server may send an authentication authorization request to a PCRF, to trigger an evolved packet system (English: Evolved Packet System, EPS for short) core network device to initiate a process of establishing a voice-dedicated bearer, where the authentication authorization request includes service requirement information of the VoLTE service. The EPS core network device may send, to the access network device, a request message for establishing a voice-dedicated bearer, where the request message for establishing the voice-dedicated bearer includes the service requirement information of the VoLTE service.

In a second manner, the service application server delivers the first establishment request to the access network device by using an interface between the service application server and the access network device.

The interface between the service application server and the access network device may be a private interface provided by a device manufacturer for the service application server and the access network device. The service application server may directly deliver the first establishment request (for example, a request for establishing the VoLTE service) to the access network device by using the private interface, where the first establishment request carries the service requirement of the to-be-established service. A request message (for example, the first establishment request) sent by using the private interface may be carried in an extended field of a Real-time Transport Protocol (English: Real-time Transport Protocol, RTP for short) stream.

For example, the service requirement of the to-be-established service may include at least one of service type indication information of the to-be-established service, a radio channel requirement of the to-be-established service, coding information of the to-be-established service, a coding information list of the UE, and a terminal type of the UE, where the coding information list of the UE includes coding information supported by both the UE and the service application server.

The radio channel requirement of the to-be-established service may include at least one of an RSRP requirement, an RSRQ requirement, and an SINR requirement.

The coding information of the to-be-established service includes coding type information of the to-be-established service and coding rate set information of the to-be-established service.

Terminal type information of the UE includes at least one of an IMEI of the UE, a TAC of the IMEI, and an IMSI of the UE.

S302. The access network device receives the first establishment request sent by the core network device or the service application server.

It may be figured out that, if the service application server sends the first establishment request to the access network device in the first manner, the access network device may receive, by using the core network device, the first establishment request sent by the service application server; or if the service application server sends the first establishment request to the access network device in the second manner, the access network device may receive, by directly using the private interface between the service application server and the access network device, the first establishment request sent by the service application server.

S303. The access network device determines that radio channel quality of a first cell of a first network in which UE is located does not meet the service requirement of the to-be-established service.

For example, the first network in this embodiment of this application may be a 5G network or a 4G network.

After receiving the first establishment request, the access network device may determine whether the radio channel quality of the first cell meets the service requirement of the to-be-established service; and if the radio channel quality of the first cell meets the service requirement of the to-be-established service, the access network device may allocate a radio resource to the to-be-established service; or if the radio channel quality of the first cell does not meet the service requirement of the to-be-established service, S304 and S305, or S306, or S307 may continue to be performed.

For example, after receiving the first establishment request carrying the service requirement of the to-be-established service, the access network device may obtain the radio channel requirement of the to-be-established service based on the service requirement of the to-be-established service, then compare the obtained radio channel requirement of the to-be-established service with the radio channel quality of the first cell, and determine whether the radio channel quality of the first cell meets the service requirement of the to-be-established service.

For example, assuming that the service requirement of the to-be-established service includes the service type indication information of the to-be-established service, the access network device may determine a specific service type of the to-be-established service (for example, the VoLTE service, the video service, or the service of the another type) based on the service type indication information; and then the access network device may determine the radio channel requirement (for example, the RSRP requirement, the RSRQ requirement, or the SINR requirement) of the to-be-established service based on the service type of the to-be-established service and a preconfigured correspondence between the service type and the radio channel requirement. For another example, assuming that the service requirement of the to-be-established service includes the coding information of the to-be-established service, the access network device may determine, based on the coding information of the to-be-established service, a radio channel requirement corresponding to the coding information of the to-be-established service.

It may be figured out that, when determining that an uplink and/or downlink radio channel quality parameter of the first cell in which the UE is located cannot meet the radio channel requirement of the to-be-established service, the access network device may determine that the radio channel quality of the first cell of the first network in which the UE is located cannot meet the service requirement of the to-be-established service.

For example, the uplink and/or downlink radio channel quality parameter may include at least one of uplink and/or downlink RSRP, an uplink and/or downlink SINR, and uplink and/or downlink RSRQ. For example, if the uplink and/or downlink RSRP is lower than the RSRP requirement, or the uplink and/or downlink RSRQ is lower than the RSRQ requirement of the to-be-established service, or the uplink and/or downlink SINR is lower than the SINR requirement of the to-be-established service, the access network device may determine that the radio channel quality of the first cell cannot meet the service requirement of the to-be-established service.

For example, in an application scenario of this embodiment of this application, the service requirement of the to-be-established service may include the coding information of the to-be-established service and the coding information list of the UE. The coding information list of the UE includes the coding information supported by both the UE and the service application server.

In this application scenario, "The access network device determines that radio channel quality of a first cell of a first network in which UE is located does not meet the service requirement of the to-be-established service" in S303 may specifically include: the access network device determines that the radio channel quality of the first cell meets radio channel quality required by at least one type of coding information in the coding information list of the UE, but the radio channel quality of the first cell does not meet radio channel quality required by the coding information of the to-be-established service.

S304. The access network device sends a first establishment response to the core network device or the service application server, where the first establishment response is used to notify the core network device or the service application server that the radio channel quality of the first cell does not meet the service requirement of the to-be-established service.

The first establishment response carries at least one of the radio channel quality of the first cell, the terminal type information of the UE, information about a carrier frequency accessed by the UE, location information of the UE, load information of the first cell, RAT information of the first network, coding information recommended for use, and bandwidth information of the to-be-established service. It may be figured out that, the access network device may determine, after determining that the radio channel quality of the first cell meets the radio channel quality required by at least one type of coding information in the coding information list of the UE, the coding information recommended for use. The coding information recommended for use may be coding information that is selected by the access network device from the coding information list of the UE and supported by both the UE and the service application server, and the coding information recommended for use is a piece of coding information in coding information supported by the first cell.

The location information of the UE includes at least one of a cell identity of the UE, a base station identity of the UE, a TAI of the UE, a LAI of the UE, and a RAI of the UE.

S305. The service application server receives the first establishment response sent by the access network device or the core network device.

S306. The access network device hands over the UE to a second cell of the first network.

S307. The access network device hands over the UE to a third cell of a second network.

When the radio channel quality of the first cell does not meet the service requirement of the to-be-established service, the access network device may attempt to hand over the UE to the second cell of the first network or the third cell of the second network.

For example, the second network is any one of the 4G network, a 3G network, and a 2G network. For example, when the first network is the 5G network, the second network may be any one of the 4G network, the 3G network, and the 2G network; or when the first network is the 4G network, the second network may be the 3G network or the 2G network. The first cell and the second cell in this embodiment of this application may be different cells in the first network.

In the service establishment method provided in this embodiment of this application, in a process of establishing the service for the UE, the service application server may deliver corresponding service requirement information to the access network device based on the service requirement and a real-time status. Correspondingly, the access network device may use the received service requirement information as an admission threshold for service establishment. To be specific, when radio signal quality of the cell in which the UE is located does not meet the service requirement, the access network device notifies the service application server, so that the service application server makes a corresponding adjustment; or the access network device may hand over the UE to another cell that can meet the service requirement, so that the service is established in the another cell. In this solution, the access network device may use the service requirement of the to-be-established service, sent by the service application server, as the admission threshold for service establishment. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold (that is, a scenario in which the radio channel quality of the first cell does not meet the service requirement of the to-be-established service), for example, in a weak coverage area of network signals, a network side may adjust the service requirement or hand over the UE to another cell based on an actual network status. Therefore, after the service is established, normal execution of the service can be ensured, and user experience brought by execution of the service is improved.

In an implementation of this embodiment of this application, the service application server may instruct, by using instruction information (such as first instruction information, second instruction information, or third instruction information) included in the service requirement of the to-be-established service, the access network device to directly return the first establishment response to the service application server or hand over the UE to another cell when the radio channel quality of the first cell does not meet the service requirement of the to-be-established service, that is, instruct the access network device to perform one of S304 or S306 or S307 when the radio channel quality of the first cell does not meet the service requirement of the to-be-established service.

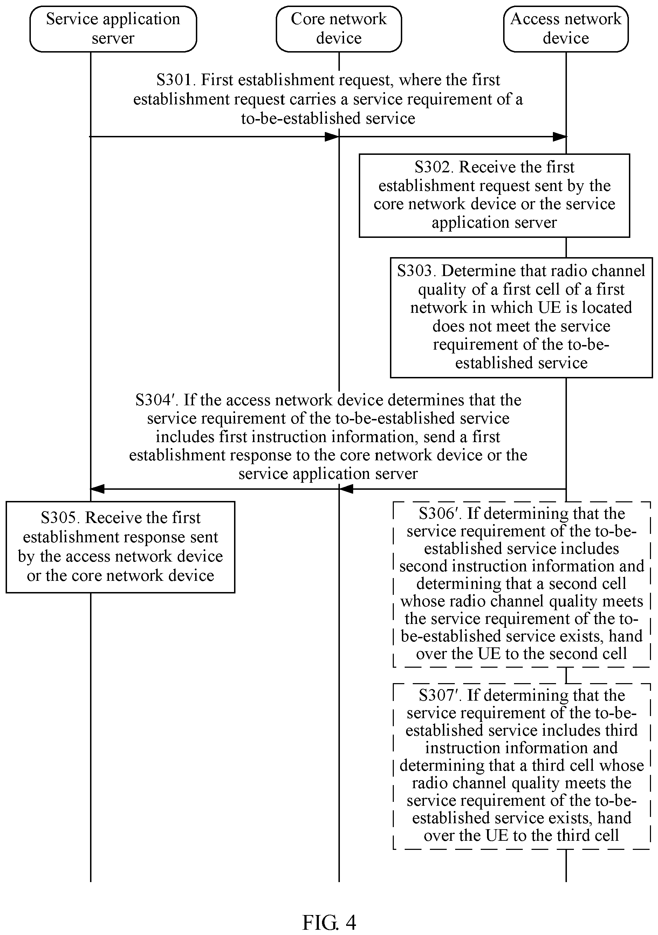

Specifically, when the service requirement of the to-be-established service includes the first instruction information, the first instruction information is used to instruct the access network device to send the first establishment response to the core network device or the service application server when the radio channel quality of the first cell does not meet the service requirement of the to-be-established service; therefore, when the radio channel quality of the first cell does not meet the service requirement of the to-be-established service, the access network device may directly send the first establishment response to the core network device or the service application server. Specifically, as shown in FIG. 4, S304 in FIG. 3 may be replaced with S304'.

S304'. If the access network device determines that the service requirement of the to-be-established service includes first instruction information, the access network device sends a first establishment response to the core network device or the service application server.

When the service requirement of the to-be-established service includes second instruction information, the second instruction information is used to instruct the access network device to hand over the UE to the second cell when the radio channel quality of the first cell does not meet the service requirement of the to-be-established service; therefore, when the radio channel quality of the first cell does not meet the service requirement of the to-be-established service, the access network device may hand over the UE to the second cell of the first network. Specifically, as shown in FIG. 4, S306 in FIG. 3 may be replaced with S306'.

S306'. If the access network device determines that the service requirement of the to-be-established service includes second instruction information and the access network device determines that a second cell whose radio channel quality meets the service requirement of the to-be-established service exists, the access network device hands over the UE to the second cell.

When the service requirement of the to-be-established service includes third instruction information, the third instruction information is used to instruct the access network device to hand over the UE to the third cell when the radio channel quality of the first cell does not meet the service requirement of the to-be-established service; therefore, when the radio channel quality of the first cell does not meet the service requirement of the to-be-established service, the access network device may hand over the UE to the third cell. Specifically, as shown in FIG. 4, S307 in FIG. 3 may be replaced with S307'.

S307'. If the access network device determines that the service requirement of the to-be-established service includes third instruction information and the access network device determines that a third cell whose radio channel quality meets the service requirement of the to-be-established service exists, the access network device hands over the UE to the third cell.

It may be figured out that, the access network device may determine, before handing over the UE to the second cell or the third cell, that the second cell or the third cell whose radio channel quality meets the service requirement of the to-be-established service exists.

In this embodiment of this application, for example, the access network device determines that the second cell whose radio channel quality meets the service requirement of the to-be-established service exists, and this is used as an example herein to describe how to determine that the second cell or the third cell whose radio channel quality meets the service requirement of the to-be-established service exists.

In a first manner, the access network device may deliver a measurement control command to the UE, where the measurement control command is used to instruct the UE to measure the radio channel quality of the second cell; the access network device receives a measurement report reported by the UE, where the measurement report carries a measurement result obtained by the UE by measuring the radio channel quality of the second cell, and the measurement result may include a radio channel quality parameter of the second cell; and the access network device may determine, based on the measurement result, that the second cell whose radio channel quality meets the service requirement of the to-be-established service exists; or the measurement result may be information indicating that the second cell whose radio channel quality meets the service requirement of the to-be-established service exists, and the access network device may directly determine, according to an indication of the measurement result, that the second cell whose radio channel quality meets the service requirement of the to-be-established service exists.

In a second manner, the access network device delivers a measurement control command to the UE, where the measurement control command carries a measurement reporting condition determined based on the service requirement of the to-be-established service, the measurement control command is used to instruct the UE to measure the radio channel quality of the second cell, and the measurement reporting condition is used to instruct the UE to report a measurement report to the access network device when the UE determines that the radio channel quality of the second cell meets the measurement reporting condition; and if the access network device receives the measurement report reported by the UE, the access network device determines that the second cell whose radio channel quality meets the service requirement of the to-be-established service exists.

It should be noted that a method for determining, by the access network device, that the third cell whose radio channel quality meets the service requirement of the to-be-established service exists is similar to the method for determining, by the access network device, that the second cell whose radio channel quality meets the service requirement of the to-be-established service exists. Details are not described again herein in this embodiment of this application.

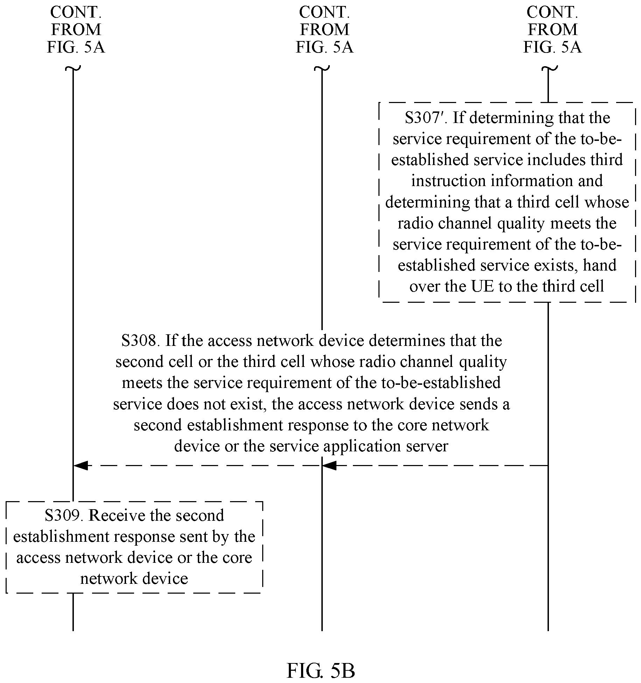

When the second cell or the third cell whose radio channel quality meets the service requirement of the to-be-established service does not exist, as shown in FIG. 5B, the method in this embodiment of this application may further include S308 and S309.

S308. If the access network device determines that the second cell or the third cell whose radio channel quality meets the service requirement of the to-be-established service does not exist, the access network device sends a second establishment response to the core network device or the service application server.

The second establishment response is used to notify the core network device or the service application server that the radio channel quality of the first cell does not meet the service requirement of the to-be-established service and that the second cell or the third cell whose radio channel quality meets the service requirement of the to-be-established service does not exist.

It should be noted that a method for sending, by the access network device, the second establishment response to the core network device or the service application server is similar to the method for sending, by the access network device, the first establishment response to the core network device or the service application server. Details are not described again herein in this embodiment of this application.

S309. The service application server receives the second establishment response sent by the access network device or the core network device.

The second establishment response carries at least one of the radio channel quality of the first cell, the terminal type information of the UE, the information about the carrier frequency accessed by the UE, the location information of the UE, the load information of the first cell, the RAT information of the first network, the coding information recommended for use, and the bandwidth information of the to-be-established service.

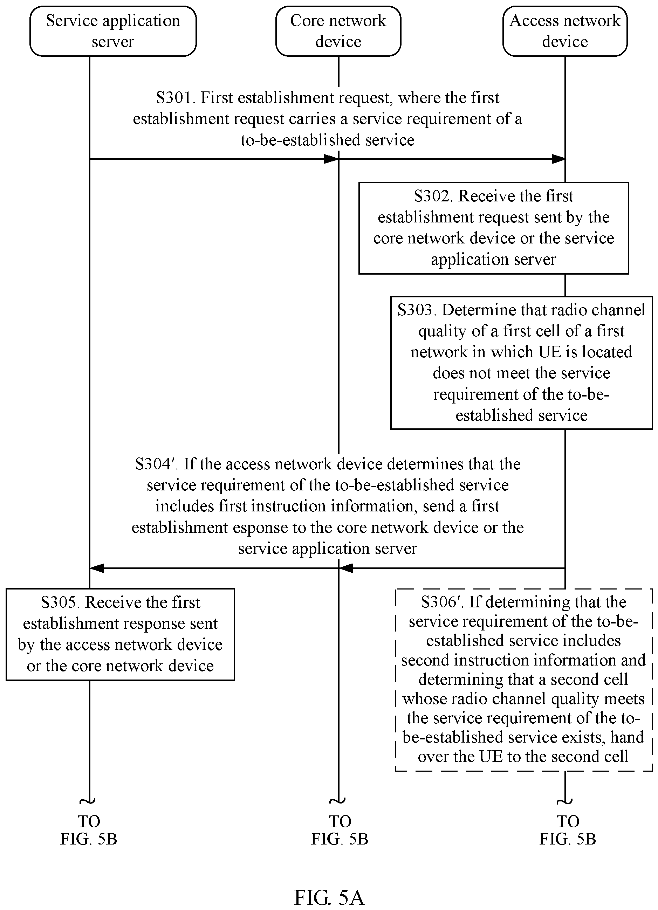

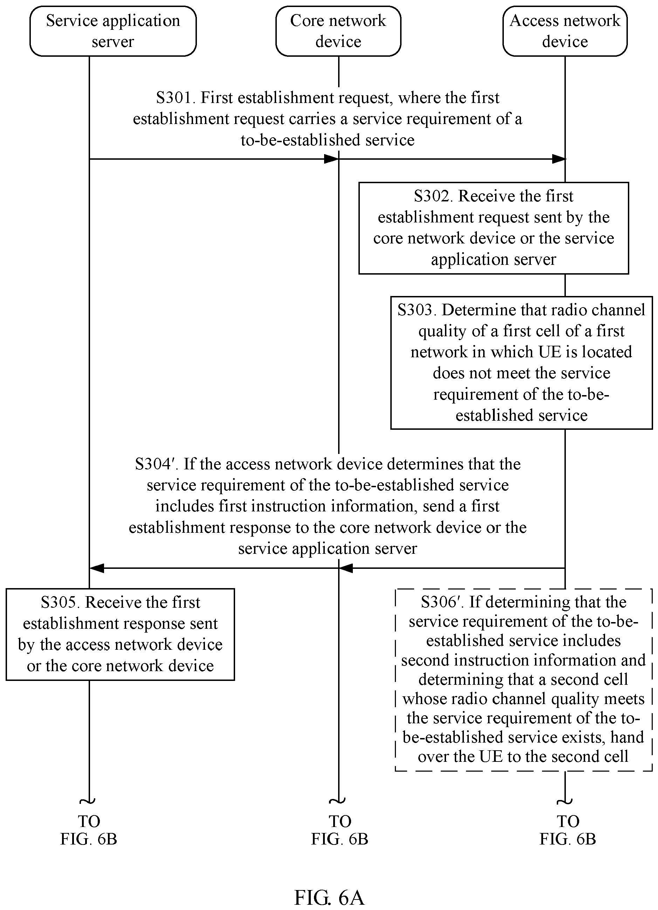

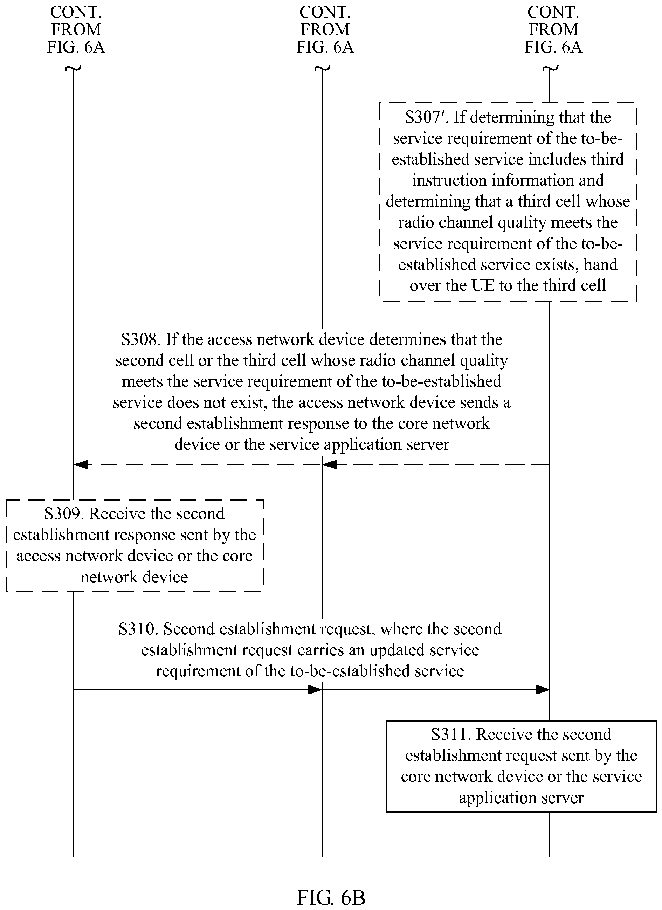

At least one of the radio channel quality of the first cell, the terminal type information of the UE, the information about the carrier frequency accessed by the UE, the location information of the UE, the load information of the first cell, the RAT information of the first network, the coding information recommended for use, and the bandwidth information of the to-be-established service that are carried in the first establishment response or the second establishment response may be used by the service application server to update the to-be-established service. After receiving the first establishment response or the second establishment response, the service application server may determine that the radio channel quality of the first cell does not meet the service requirement of the to-be-established service, and therefore may send a second establishment request carrying an updated service requirement of the to-be-established service to the access network device. Specifically, as shown in FIG. 6A and FIG. 6B, after S305 or S309 shown in FIG. 5A and FIG. 5B, the method in this embodiment of this application may further include S310 and S311.

S310. The service application server sends a second establishment request to the access network device or the core network device, where the second establishment request carries an updated service requirement of the to-be-established service.

It should be noted that a method for sending, by the service application server, the second establishment request to the access network device or the core network device is similar to the method for sending, by the service application server, the first establishment request to the access network device or the core network device. Details are not described again herein in this embodiment of this application.

S311. The access network device receives the second establishment request sent by the core network device or the service application server.

It should be noted that a method for receiving, by the access network device, the second establishment request sent by the core network device or the service application server is similar to the method for receiving, by the access network device, the first establishment request sent by the core network device or the service application server. Details are not described again herein in this embodiment of this application.

It may be figured out that, after the access network device receives the second establishment request, the access network device may determine whether the radio channel quality of the first cell meets the updated service requirement of the to-be-established service that is carried in the second establishment request. For a method for determining, by the access network device, whether the radio channel quality of the first cell meets the updated service requirement of the to-be-established service, refer to the foregoing method for determining, by the access network device, whether the radio channel quality of the first cell meets the service requirement of the to-be-established service. Details are not described again herein in this embodiment of this application.

For example, in this embodiment of this application, the coding information of the to-be-established service that is included in the service requirement of the to-be-established service is first coding information, and updated coding information of the to-be-established service that is included in the updated service requirement of the to-be-established service is second coding information. The service application server may determine that the coding information of the to-be-established service is the first coding information, determine that the updated coding information of the to-be-established service is the second coding information, and convert the coding information of the to-be-established service from the first coding information to the second coding information. Specifically, when sending the second establishment request, the service application server may determine that the updated coding information of the to-be-established service is the second coding information. Certainly, the service application server may further send a second message to the UE, where the second message is used to indicate that the coding information of the to-be-established service is converted from the first coding information to the second coding information.

It may be figured out that, when the service application server determines that a radio channel requirement corresponding to the first coding information is higher than a radio channel requirement corresponding to the second coding information, the service application server may convert the coding information of the to-be-established service from the first coding information to the second coding information, and send the second message to the UE. Further, the first coding information and the second coding information may be a same type of coding information, but use different coding rate sets. For example, both the first coding information and the second coding information are EVS coding, but a coding rate set of the first coding information is an EVS full-rate set, and a coding rate set of the second coding information is an EVS VBR mode.

Further, before sending the first establishment request carrying the service requirement of the to-be-established service to the access network device, the service application server may determine the service requirement of the to-be-established service. Specifically, before S301 shown in any one of FIG. 3 to FIG. 6A, the method in this embodiment of this application may further include S401 or S402 to S405.

S401. The service application server determines the service requirement of the to-be-established service based on at least one of a MOS requirement of the to-be-established service, the radio channel quality of the first cell, terminal type information of the UE, information about a carrier frequency accessed by the UE, location information of the UE, coding information of the to-be-established service, load information of the first cell, RAT information of the first network, and bandwidth information of the to-be-established service.

For example, the service application server may store a correspondence between the service requirement of the service and at least one of the MOS, the radio channel quality of the cell in which the terminal is located, the terminal type information of the terminal, the information about the carrier frequency accessed by the terminal, the location information of the UE, the coding information of the service, the load information of the cell in which the terminal is located, the RAT information of the network in which the terminal is located, and the bandwidth information of the service, where the correspondence is obtained by the service application server by collecting statistics of big data. Therefore, the service application server may query the correspondence based on at least one of the MOS requirement of the to-be-established service, the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service, to determine the service requirement of the to-be-established service.

However, when the service application server does not store the correspondence, a third-party network device storing the correspondence determines the service requirement of the to-be-established service. Specifically, the method in this embodiment of this application may further include S402 to S405.

S402. The service application server sends a first query request to a third-party network device, where the first query request carries at least one of a MOS requirement of the to-be-established service, the radio channel quality of the first cell, terminal type information of the UE, information about a carrier frequency accessed by the UE, location information of the UE, coding information of the to-be-established service, load information of the first cell, RAT information of the first network, and bandwidth information of the to-be-established service.

S403. The third-party network device receives the first query request, and determines the service requirement of the to-be-established service based on at least one of the MOS requirement of the to-be-established service, the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are carried in the first query request.

It should be noted that, for a method for determining, by the third-party network device, the service requirement of the to-be-established service, reference may be made to the foregoing method for determining, by the service application server, the service requirement of the to-be-established service. Details are not described again herein in this embodiment of this application.

S404. The third-party network device sends a first query response to the service application server, where the first query response carries the service requirement of the to-be-established service.

S405. The service application server receives the first query response sent by the third-party network device.

It may be figured out that, before the service application server determines the service requirement of the to-be-established service, the service application server may first obtain at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are used to determine the service requirement of the to-be-established service.

The service application server may obtain at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service in a process of establishing a video session between calling UE and called UE by the core network device. Specifically, before S401 or S402, the method in this embodiment of this application may further include S501 to S504.

S501. The service application server sends a second query request to the core network device or the UE or the access network device, where the second query request is used to instruct the core network device or the UE or the access network device to query at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service.

S502. The core network device or the UE or the access network device receives the second query request sent by the service application server.

S503. The core network device or the UE or the access network device queries at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service.

S504. The service application server receives a second query response sent by the core network device or the UE or the access network device, where the second query response carries at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service.

Certainly, the service application server may obtain at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service by receiving a session message sent by the UE. Specifically, before S401 or S402, the method in this embodiment of this application may further include S505.

S505: The service application server receives a first message sent by the UE, where the first message carries at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service.

For example, the first message may be Session Initiation Protocol (English: Session Initiation Protocol, SIP for short) signaling related to the to-be-established service. The service application server may receive and parse the SIP signaling, and obtain at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service.

Correspondingly, before sending the second establishment request carrying the updated service requirement of the to-be-established service to the access network device, the service application server may determine the updated service requirement of the to-be-established service. Specifically, before S310 shown in FIG. 6B, the method in this embodiment of this application may further include S601 or S602 to S605.

S601. The service application server determines the updated service requirement of the to-be-established service based on the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are carried in the first establishment response or the second establishment response.

S602. The service application server sends a third query request to the third-party network device, where the third query request carries the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are carried in the first establishment response.

S603. The third-party network device receives the third query request, and determines the updated service requirement of the to-be-established service based on the MOS requirement of the to-be-established service that is carried in the third query request, and at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are carried in the first establishment response.

S604. The third-party network device sends a third query response to the service application server, where the first query response carries the updated service requirement of the to-be-established service.

S605. The service application server receives the third query response sent by the third-party network device.

It should be noted that, for a method for determining, by the service application server or the third-party network device, the updated service requirement of the to-be-established service, reference may be made to the foregoing method for determining, by the service application server, the service requirement of the to-be-established service. Details are not described again herein in this embodiment of this application.

Further, the service application server may further terminate the to-be-established service after receiving the first establishment response or the second establishment response. Specifically, after S305 shown in FIG. 4, the method in this embodiment of this application may further include: the service application server determines to terminate the to-be-established service, based on at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service that are carried in the first establishment response or the second establishment response; the service application server sends a message for deleting the to-be-established service to the UE, where the message for deleting the to-be-established service is used to instruct the UE to terminate the to-be-established service; and the UE receives the message sent by the service application server for deleting the to-be-established service, and terminates the to-be-established service.

In the technical solution of this embodiment, in a process of establishing the service for the UE, the service application server may deliver corresponding service requirement information to the access network device based on the service requirement and a real-time status. Correspondingly, the access network device may use the received service requirement information as an admission threshold for service establishment. To be specific, when radio signal quality of the cell in which the UE is located does not meet the service requirement, the access network device notifies the service application server, so that the service application server makes a corresponding adjustment; or the access network device may hand over the UE to another cell that can meet the service requirement, so that the service is established in the another cell. In this solution, the access network device may use the service requirement of the to-be-established service, sent by the service application server, as the admission threshold for service establishment. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold (that is, a scenario in which the radio channel quality of the first cell does not meet the service requirement of the to-be-established service), for example, in a weak coverage area of network signals, a network side may adjust the service requirement or hand over the UE to another cell based on an actual network status. Therefore, after the service is established, normal execution of the service can be ensured, and user experience brought by execution of the service is improved.

The following describes a service establishment method in an embodiment of this application in detail by using a procedure for establishing a video call service in a 4G network as an example. In this embodiment of this application, UE may be calling UE or may be called UE in a video call service; correspondingly, an access network device may be an eNB corresponding to the calling UE or an eNB corresponding to the called UE; and a service application server may be an IMS core network device (such as a P-CSCF, an S-CSCF, an SCC AS, or an ATCF) corresponding to the calling UE or an IMS core network device corresponding to the called UE.

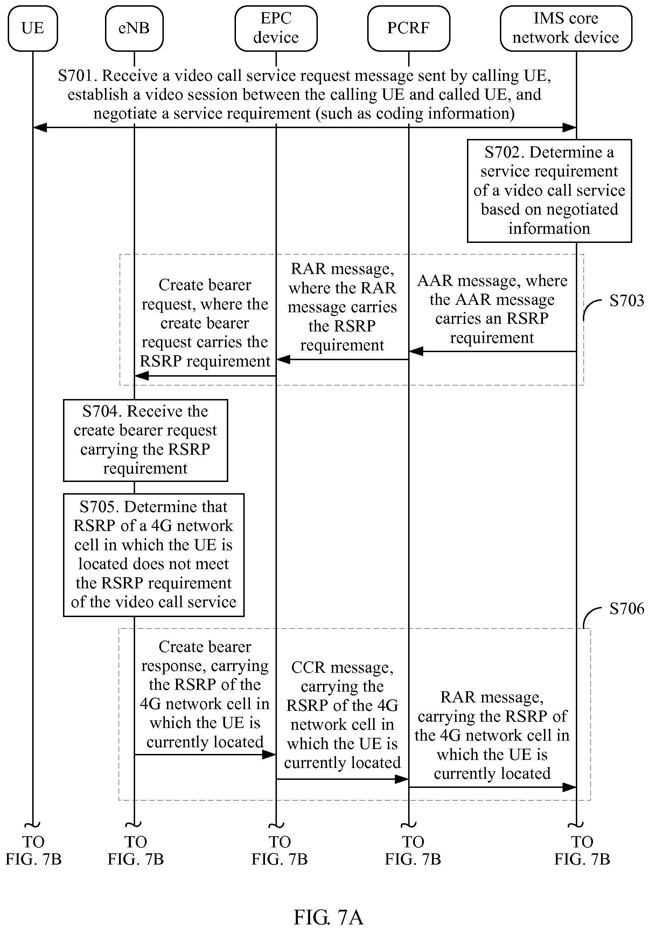

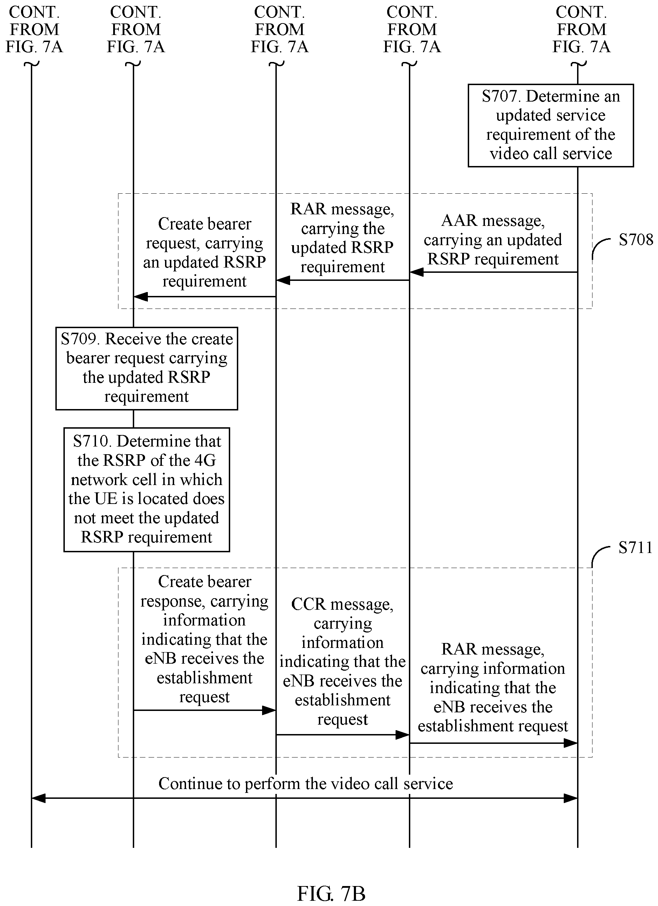

As shown in FIG. 7A and FIG. 7B, the service establishment method provided in this embodiment of this application may include the following steps.

S701. An IMS core network device receives a video call service request message sent by calling UE, establishes a video session between the calling UE and called UE, and negotiates a service requirement (such as coding information).

In a process in which the IMS core network device establishes the video session between the calling UE and the called UE, the IMS core network device may negotiate coding information of the video call service with the calling UE and the called UE. The coding information of the video call service may include a coding type and coding rate set information of the video call. For example, the coding type of the video call may be a coding mode such as enhanced voice service (English: Enhanced Voice Service, EVS for short) coding, adaptive multi-rate wideband speech coding (Adaptive Multi-Rate Wideband Speech Codec, AMR-WB for short), adaptive multi-rate narrowband speech coding (English: Adaptive Multi-Rate Narrowband Speech Codec, AMR-NB for short), or Moving Picture Experts Group (English: Moving Picture Experts Group, MPEG for short) coding. The coding rate set information (codec mode set) of the video call may indicate that a coding rate of the video call is 6.60 kbps to 23.85 kbps.

Further, in the process in which the IMS core network device establishes the video session between the calling UE and the called UE, the IMS core network device may further obtain other initial parameters of the video call service from the UE or an eNB or an evolved packet core (English: Evolved Packet Core, EPC for short) network device, where the other initial parameters may include a terminal type of the UE, radio channel quality of a 4G cell in which the UE is located, carrier frequency information of the 4G cell in which the UE is located, current location information of the UE, load information of the 4G cell in which the UE is located (for example, whether the cell is overloaded), and bandwidth information required by the video call service. For example, the terminal type of the UE may be at least one of an IMEI, an IMSI, and an IMEI of the UE, where the IMEI included in the other initial parameters may be specifically a TAC of first eight bits in the IMEI, and the TAC is generally used to indicate a type of the UE. The radio channel quality of the 4G cell in which the UE is located may be at least one of RSRP, RSRQ, and an SINR. The carrier frequency information of the 4G cell in which the UE is located may indicate that a carrier frequency of the 4G cell in which the UE is located is 1800 MHz or 900 MHz, or the like. The current location information of the UE is used to indicate that the UE is located in a 4G cell in an ordinary macro network or a 4G cell in a high-speed railway dedicated network, or the like. The load information of the 4G cell in which the UE is located is used to indicate whether the 4G cell in which the UE is located is overloaded.

For example, terminal type information of the UE in this embodiment of this application may be included in related session signaling when the UE initiates the video call service. For example, SIP signaling may carry the terminal type information of the UE. The IMS core network device may receive and parse the SIP signaling to obtain the terminal type information of the UE. Certainly, the IMS core network device may also obtain the terminal type information of the UE from the UE or an EPC device (such as an MME) by sending a query request. Certainly, the SIP signaling may further carry information such as the radio channel quality of the 4G cell in which the UE is located.

S702. The IMS core network device determines a service requirement of a video call service based on at least one of a MOS requirement of the video call service, radio channel quality of a cell in which the UE is located, terminal type information of the UE, information about a carrier frequency accessed by the UE, location information of the UE, coding information of the video call service, load information of the cell in which the UE is located, RAT information of the cell in which the UE is located, and bandwidth information of the video call service.

The service requirement of the video call service is a radio channel requirement of the video call service on the eNB. The service requirement of the video call service may include at least one of service type indication information of the video call service, the radio channel requirement of the video call service, the coding information of the video call service, and the terminal type of the UE.

The radio channel requirement of the video call service may include at least one of an RSRP requirement, an RSRQ requirement, and an SINR requirement. The radio channel requirement of the video call service is used to indicate that the video call service requires that a lowest criterion for RSRP of a first cell in which the UE is located should be the RSRP requirement, that a lowest criterion for RSRQ of the first cell in which the UE is located should be the RSRQ requirement, and that a lowest criterion for an SINR of the first cell in which the UE is located should be the SINR requirement. The coding information of the video call service includes coding type information of the video call service and coding rate set information of the video call service. The coding information of the video call service is used to indicate a coding type and a coding rate that are allowed to be used for the video call service. The terminal type information of the UE includes at least one of the IMEI of the UE, the TAC of the IMEI, and the IMSI of the UE.

It may be figured out that, if an internal database of the IMS core network device stores a correspondence between the service requirement of the video call service and at least one of the MOS of the video call service, the radio channel quality of the cell in which the terminal is located, the terminal type information of the terminal, the information about the carrier frequency accessed by the terminal, the location information of the UE, the coding information of the service, the load information of the cell in which the terminal is located, the RAT information of the network in which the terminal is located, and the bandwidth information of the service, the IMS core network device may query the correspondence to determine the service requirement of the video call service.

For example, assuming that the IMS core network device sets a preset MOS requirement of the video service to 4.0, that is, a corresponding lowest MOS value that enables a user to enjoy the video call service completely and smoothly is 4, and the IMS core network device has obtained negotiated coding information (for example, AMR-WB coding is used, and the allowed rate set is 6.60 kbps to 23.85 kbps), an IMS may query the internal database based on the preset MOS requirement and the coding information to obtain an RSRP requirement corresponding to MOS = 4.0 and the coding information AMR-WB and 6.60 kbps to 23.85 kbps. For another example, assuming that the IMS core network device sets a preset MOS requirement of the video service to 4.0, and the IMS core network device has learned that the UE is currently located in the 4G cell in the high-speed railway dedicated network, the IMS may query the internal database based on the preset MOS requirement and the location information of the UE to obtain an SINR requirement corresponding to MOS = 4.0 when the UE is located in the cell in the high-speed railway dedicated network. A method for obtaining, by the IMS core network device, the service requirement based on other parameters is similar to the description of the foregoing example. Details are not described again herein.

Optionally, if the correspondence is not stored in the IMS core network device, a third-party network device storing the correspondence may determine the service requirement of the video call service, and then send the determined service requirement of the video call service to the IMS core network device. A method for determining, by the third-party network device, the service requirement of the video call service is similar to the method for determining, by the IMS core network device, the service requirement of the video call service. Details are not described again herein in this embodiment of this application.

S703. The IMS core network device sends a first establishment request of the video call service to an eNB, to trigger the eNB to allocate a radio resource to the video call service, where the establishment request of the video call service carries the service requirement of the video call service.

As shown in FIG. 7A, S703 may include:
the IMS core network device sends an authentication authorization request (English: Authentication Authorization Request, AAR for short) message to a PCRF, to trigger establishment of a dedicated bearer of the video call service, where the AAR message may further carry service requirement information of the video call service (as shown in FIG. 7A, an example in which the service requirement information of the video call service includes the RSRP requirement is used for description), in addition to information such as a user identity of the UE, an IMS application layer charging identifier, and media description information.

Based on the media description information carried in the AAR, the PCRF may send a re-authentication request (English: Re-Authentication Request, RAR for short) message carrying a quality of service (English: Quality of Service, QoS for short) rule to a PGW of an EPC, to trigger the PGW to establish a user plane data dedicated bearer of the video call service. The RAR message carries the service requirement information of the video call service (as shown in FIG. 1, an example in which the service requirement information of the video call service includes the RSRP requirement is used for description).

After receiving the RAR request sent by the PCRF, the PGW may trigger a procedure for establishing a dedicated bearer of the video call service, and send a create bearer request (English: Create Bearer Request) message to the eNB in an access network by using an SGW and an MME (that is, an EPC device) of the EPC, where the create bearer request message carries the service requirement information of the video call service (as shown in FIG. 1, an example in which the service requirement information of the video call service includes the RSRP requirement is used for description).

In another implementation of this embodiment of this application, the IMS core network device may further directly send, to the eNB, a request for establishing the video call service, where the request for establishing the video call service carries the service requirement information of the video call service. For example, if an interface exists between the IMS core network device and the eNB, the IMS core network device may send, to the eNB by using the interface, the request for establishing the video call service. The interface between the IMS core network device and the eNB is the interface between the service application server and the access network device in the foregoing embodiment.

In another implementation of this embodiment of this application, the IMS core network device (such as an ATCF or an ATGW) may further generate a user plane data packet (such as an RTP data packet), and add the service requirement information (such as the RSRP requirement) of the video call service to the user plane data packet, so that the eNB can parse the received user plane data packet to obtain the RSRP requirement.

S704. The eNB receives the first establishment request of the video call service.

S705. The eNB determines that the radio channel quality of the 4G network cell in which the UE is located does not meet the service requirement of the video call service.

As shown in FIG. 7A, using the RSRP requirement as the service requirement, S705 is specifically as follows: The eNB determines that RSRP of the 4G network cell in which the UE is located does not meet the RSRP requirement of the video call service.

It should be noted that, for a method for determining, by the eNB, that the radio channel quality of the 4G network cell in which the UE is located does not meet the service requirement of the video call service, reference may be made to the foregoing method for determining, by the access network device, that the radio channel quality of the first cell does not meet the service requirement of the video call service. Details are not described again herein in this embodiment of this application.

After S705, the method in this embodiment of this application may further include S706, S707, or S708. Specifically, the eNB may determine, based on instruction information included in the service requirement of the video call service, to perform one of S706, S707, or S708.

S706. If the eNB determines that the service requirement of the video call service includes first instruction information, the eNB sends a first establishment response to the IMS core network device.

As shown in FIG. 7A, in an implementation of this embodiment of this application, the eNB may send the first establishment response to the IMS core network device in the following manner:

The eNB may send a create bearer response (English: create bearer response) message to the EPC device (such as the MME). The create bearer response message carries indication information used to indicate that the eNB cannot provide radio channel quality indicated by the service requirement of the video call service.

After receiving the create bearer response, the EPC device may send a credit control request (English: Credit Control Request, CCR) message to the PCRF. The CCR message carries indication information used to indicate that the dedicated bearer of the video call service fails to be established, and carries the indication information used to indicate that the eNB cannot provide the radio channel quality indicated by the service requirement of the video call service.

The PCRF may send a RAR message or an abort-session-request (English: Abort-Session-Request, ASR for short) message to the IMS core network device, where the RAR message or the ASR message carries the indication information used to indicate that the eNB cannot provide the radio channel quality indicated by the service requirement of the video call service.

In addition to the implementation shown in FIG. 7A, the eNB may further send the first establishment response to the IMS core network device by using the interface between the eNB and the IMS core network device. The interface between the IMS core network device and the eNB is the interface between the service application server and the access network device in the foregoing embodiment. Alternatively, the eNB may further send a user plane data packet including the first establishment response to the IMS core network device. For a specific method for sending, by the eNB, the first establishment response to the IMS core network device by using the interface between the eNB and the IMS core network device or the user plane data packet, refer to the related descriptions in this embodiment of this application. Details are not described again herein.

Optionally, the eNB may further report at least one of the radio channel quality of the 4G network cell in which the UE is currently located, the terminal type information of the UE, the carrier frequency information of the 4G cell, the location information of the UE, time information, the load information of the 4G cell, the bandwidth information of the video call service, and the like to the IMS core network device by using the create bearer response message, the CCR message, the RAR message, the ASR message, the interface between the eNB and the IMS core network device, or the user plane data packet. As shown in FIG. 7A, for example, the create bearer response, the CCR message, or the RAR message carries the RSRP of the first cell, and this is used as an example to describe the first establishment response carrying at least one of the radio channel quality of the 4G network cell in which the UE is currently located, the terminal type information of the UE, the carrier frequency information of the 4G cell, the location information of the UE, the time information, the load information of the 4G cell, the bandwidth information of the video call service, and the like.

Further, the method in this embodiment of this application may further include:
if the eNB determines that the service requirement of the video call service includes second instruction information, and the eNB determines that a second cell whose radio channel quality meets the service requirement of the video call service exists, the eNB hands over the UE to the second cell; or
if the eNB determines that the service requirement of the video call service includes third instruction information, and the eNB determines that a third cell whose radio channel quality meets the service requirement of the video call service exists, the eNB hands over the UE to the third cell.

Because the radio channel quality of the 4G network cell in which the UE is located does not meet the service requirement of the video call service, that is, the radio channel quality of the 4G network cell in which the UE is currently located is greater than a service requirement threshold delivered by the IMS core network device, the eNB may perform an internal handover procedure in the 4G network for the UE to hand over the UE from the first cell to the second cell of the 4G network, or may perform an inter-network handover procedure between the 4G network and a 3G network or a 2G network for the UE to hand over the UE from the first cell of the 4G network to the third cell of the 3G network or the 2G network.

It should be noted that, after the eNB hands over the UE from the first cell of the 4G network to the third cell of the 3G network or the 2G network, the eNB may perform the video call service in a packet switched (English: Packet Switch, PS for short) domain of the 3G network or the 2G network; in this case, the inter-network handover procedure is a PS to PS handover procedure. Alternatively, the video call service may be performed in a circuit switched (English: Circuit Switched Domain, CS for short) domain of the 3G network or the 2G network; in this case, the inter-network handover procedure is a PS to CS handover procedure.

For a method for determining, by the eNB, that the second cell or the third cell whose radio channel quality meets the service requirement of the video call service exists, refer to the related descriptions in the foregoing embodiment. Details are not described again herein in this embodiment of this application.

Optionally, in this embodiment of this application, the IMS core network device may add instruction information (first instruction information, second instruction information, or third instruction information) to the service requirement of the video call service when the UE meets the following conditions:
Condition 1: The UE supports voice coding A and voice coding B.
Condition 2: A requirement of the voice coding B on the radio channel quality of the cell is lower than a requirement of the voice coding A on the radio channel quality of the cell.
Condition 3: The video call service currently uses the voice coding A.

For example, it is assumed that the UE supports both the EVS coding and the AMR-WB coding, and that the video call service currently uses the AMR-WB coding. In same user experience, using RSRP as an example, a requirement of the EVS coding on the RSRP of the cell is RSRP > -120 dBm, but a requirement of the AMR-WB coding on the RSRP of the cell is RSRP > -115 dBm. In this case, the IMS core network device may add the first instruction information to the service requirement information of the video call service, so that when the RSRP of the first cell does not meet the requirement of the AMR-WB on the RSRP of the cell, the eNB may send the first establishment response to notify the IMS core network device, and that the IMS core network device uses the EVS coding. In this way, execution of single radio voice call continuity (English: Single Radio Voice Call Continuity, SRVCC for short) is avoided. Alternatively, the IMS core network device may add the second instruction information or the third instruction information to the service requirement information of the video call service, so that when the RSRP of the first cell does not meet the requirement of the AMR-WB on the RSRP of the cell, the eNB may directly perform SRVCC, and that another cell provides a corresponding radio resource for the video call service of the UE.

Certainly, the second cell or the third cell whose radio channel quality meets the service requirement of the video call service may not exist. In this case, as shown in FIG. 7A and FIG. 7B, the method in this embodiment of this application may further include: if the eNB determines that the second cell or the third cell whose radio channel quality meets the service requirement of the video call service does not exist, the eNB sends a second establishment response to the IMS core network device; and the IMS core network device receives the second establishment response sent by the eNB.

When the second cell or the third cell whose radio channel quality meets the service requirement of the to-be-established service does not exist, the eNB may refuse to allocate a radio resource to the video call service, and notify (by using the second establishment response) the IMS core network device that the radio channel quality of the first cell does not meet the service requirement of the video call service and that the second cell or the third cell whose radio channel quality meets the service requirement of the video call service does not exist.

S707. The IMS core network device determines an updated service requirement of the video call service based on the received first establishment response or second establishment response.

It may be figured out that, the IMS core network device may determine the updated service requirement of the video call service based on at least one of the radio channel quality of the first cell, the terminal type information of the UE, the information about the carrier frequency accessed by the UE, the location information of the UE, the coding information of the video call service, the load information of the first cell, the RAT information of the first network, and the bandwidth information of the video call service that are carried in the first establishment response or the second establishment response. A method for determining, by the IMS core network device, the updated service requirement of the video call service is similar to the method for determining, by the IMS core network device, the service requirement of the video call service. Details are not described again herein in this embodiment of this application.

For example, assuming that the service requirement of the video call service includes the coding information of the video call service, the video call service uses the AMR-WB coding, and a coding rate of the AMR-WB coding is 23.85 kbps, but the requirement of the AMR-WB coding on the RSRP of the first cell is RSRP > -115 dBm. However, if the RSRP of the first cell is -118 dBm (< -115 dBm), the IMS core network device may adjust the coding type of the video service to the EVS coding, adjust the coding rate to 13.2 kbps coding, and for the EVS coding mode, determine that the requirement of the EVS coding on the RSRP of the first cell is RSRP > -120 dBm (< -118 dBm).

Optionally, after adjusting the coding information of the video call service, the IMS core network device may send a notification message (that is, the foregoing second message) for adjusting service coding information to the calling UE and the called party. In addition, if the called UE does not support the EVS coding, the IMS core network device may further perform code conversion between the calling UE and the called party subsequently.

S708. The IMS core network device sends a second establishment request of the video call service to the eNB.

For example, as shown in FIG. 7B, a method for sending, by the IMS core network device, the second establishment request of the video call service to the eNB is similar to the method for sending, by the IMS core network device, the first establishment request of the video call service to the eNB. Details are not described again herein in this embodiment of this application. In FIG. 7B, for example, updated RSRP is used as the updated service requirement of the video call service.

S709. The eNB receives the second establishment request sent by the IMS core network device, where the second establishment request carries the updated service requirement of the video call service.

For example, as shown in FIG. 7B, based on the foregoing example, S709 is as follows: The eNB receives a create bearer request carrying an updated RSRP requirement.

After receiving the updated service requirement of the video call service, the eNB may continue to perform S705, that is, determine whether the radio channel quality of the 4G network cell in which the UE is located meets the updated service requirement of the video call service, and perform a corresponding subsequent procedure. As shown in FIG. 7B, the method in this embodiment of this application may further include S710 and S711. For detailed descriptions of S710 and S711, refer to the related content in this embodiment of this application. Details are not described again herein.

Further, in this embodiment of this application, the IMS core network device may further terminate the video call service after receiving the first establishment response or the second establishment response. The IMS core network device may terminate the video call service when determining that the service requirement of the video call service cannot be further adjusted so that the radio channel quality of the first cell can meet the service requirement of the video call service. When determining to terminate the video call service, the IMS core network device may send a message for deleting the video call service to the calling UE, where the deletion message may carry a value that carries a specific reason of terminating the video call service, for example, the radio channel quality of the first cell cannot meet the service requirement of the video call service.

In an implementation, after the IMS core network device receives the first establishment response or the second establishment response sent by the eNB, if the IMS core network device determines that the service requirement of the video call service cannot be further adjusted so that the radio channel quality of the first cell can meet the service requirement of the video call service, the IMS core network device may negotiate with the calling UE, ask the calling UE whether to accept current service experience and to continue to keep the service. If the UE accepts the current service experience, the IMS core network device does not adjust the service requirement of the video call service, and does not perform an operation of terminating the video call service, but may re-trigger, to the EPC device and the eNB, a procedure for establishing a dedicated bearer of the video call service. In this process of establishing the dedicated bearer of the video call service, the IMS core network device does not send the service requirement of the video call service to the EPC device and the eNB, or may alternatively send the service requirement of the video call service but also instruct the eNB to ignore the service requirement of the video call service when the eNB allocates a radio resource to the video call service.

In the service establishment method provided in this embodiment of this application, in the process of establishing the video call service for the UE, the IMS core network device may deliver the service requirement of the video call service to the eNB. Correspondingly, the eNB may use the received service requirement of the video call service as an admission threshold for establishing the video call service. To be specific, when radio signal quality of the cell in which the UE is located does not meet the service requirement of the video call service, the eNB may refuse to allocate a radio resource to the video call service, and notify the IMS core network device, so that the IMS core network device correspondingly adjusts the service requirement of the video call service, and that the video call service is established in the cell; or the eNB may hand over the UE to another 4G cell or 2G/3G cell that can meet the service requirement, so that the video call service is established in the another cell.

It should be noted that, in the foregoing embodiment, the video call service of the 4G network is used merely as an example to describe the service establishment method provided in this embodiment of this application. The service establishment method provided in this embodiment of this application may be further applied to a process of establishing another service in another network standard. In this solution, a network side may adaptively determine the admission threshold for service establishment based on service requirements of different services. Therefore, a problem that an admission threshold determined merely based on an empirical value in a solution of the prior art is erroneous and lacks flexibility or the like is avoided. In addition, in a scenario in which signal quality of the cell in which the UE is located is lower than the admission threshold, for example, in a weak coverage area of network signals, the network side may adjust the service requirement or hand over the UE to another cell based on an actual network status. Therefore, after the service is established, normal execution of the service can be ensured, and user experience brought by execution of the service is improved.

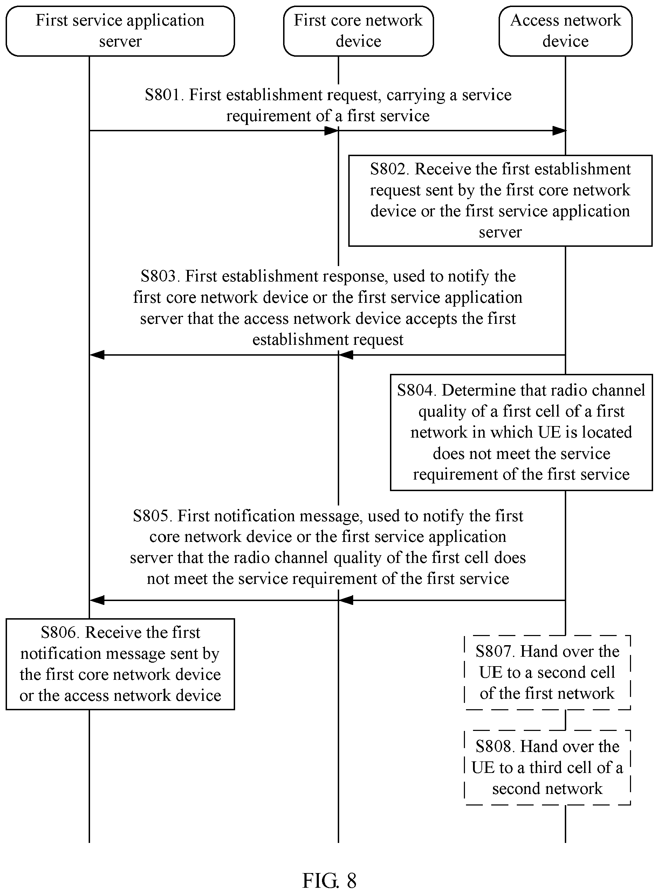

An embodiment of this application provides a service establishment method. As shown in FIG. 8, the service establishment method includes the following steps.

S801. A first service application server sends a first establishment request to an access network device or a first core network device, where the first establishment request carries a service requirement of a first service, and the service requirement of the first service is used to indicate, to the access network device, radio channel quality required by user equipment UE for executing the first service.

It should be noted that, for specific content in the service requirement of the first service in this embodiment of this application, reference may be made to detailed descriptions of the service requirement of the to-be-established service in the foregoing embodiment. Details are not described again herein in this embodiment of this application.

S802. The access network device receives the first establishment request sent by the first core network device or the first service application server.

S803. The access network device sends a first establishment response to the first core network device or the first service application server, where the first establishment response is used to notify the first core network device or the first service application server that the access network device accepts the first establishment request.

Radio channel quality of each cell in a network may change anytime. In other words, after the access network device sends the first establishment response to the first core network device or the first service application server in S803, radio channel quality of a first cell may not meet the service requirement of the first service. Specifically, after S803, the method in this embodiment of this application may further include S804.

S804. The access network device determines that radio channel quality of a first cell of a first network in which the UE is located does not meet the service requirement of the first service.

It should be noted that in this embodiment, for a specific method for determining, by the access network device, whether the radio channel quality of the first cell of the first network in which the UE is located meets the service requirement of the first service, reference may be made to the specific method for determining, by the access network device, whether the radio channel quality of the first cell meets the service requirement of the to-be-established service in the foregoing embodiment. Details are not described again herein in this embodiment of this application.

For example, in an application scenario of this embodiment of this application, the service requirement of the first service may include coding information of the first service and a coding information list of the UE. The coding information list of the UE includes coding information supported by both the UE and the service application server.

In this application scenario, "The access network device determines that radio channel quality of a first cell of a first network in which the UE is located does not meet the service requirement of the first service" in S804 may specifically include: the access network device determines that the radio channel quality of the first cell meets radio channel quality required by at least one type of coding information in the coding information list of the UE, but the radio channel quality of the first cell does not meet radio channel quality required by the coding information of the to-be-established service.

When the radio channel quality of the first cell does not meet the service requirement of the first service, any one of S805, S806, or S807 may be performed.

S805. The access network device sends a first notification message to the first core network device or the first service application server, where the first notification message is used to notify the first core network device or the first service application server that the radio channel quality of the first cell does not meet the service requirement of the first service.

The first notification message carries at least one of the radio channel quality of the first cell, terminal type information of the UE, information about a carrier frequency accessed by the UE, location information of the UE, load information of the first cell, RAT information of the first network, coding information recommended for use, and bandwidth information of the first service.

It may be figured out that, the access network device may determine, after determining that the radio channel quality of the first cell meets the radio channel quality required by at least one type of coding information in the coding information list of the UE, the coding information recommended for use. The coding information recommended for use may be coding information that is selected by the access network device from the coding information list of the UE and supported by both the UE and the service application server, and the coding information recommended for use is a piece of coding information in coding information supported by the first cell.

S806. The first service application server receives the first notification message sent by the first core network device or the access network device.

S807. The access network device hands over the UE to a second cell of the first network.

S808. The access network device hands over the UE to a third cell of a second network.

The first network in this embodiment is the same as the first network in the foregoing embodiment, and the second network is the same as the second network in the foregoing embodiment. For detailed descriptions of the first network and the second network, refer to related content in the foregoing embodiment.

In the service establishment method provided in this embodiment of this application, in a process of establishing the service for the UE, the service application server may deliver the corresponding service requirement to the access network device based on the radio channel quality required for the first service; and the access network device may send the first establishment response to the service server when the radio channel quality of the cell in which the UE is located meets the service requirement of the first service. Afterward, if the radio channel quality of the cell in which the UE is located does not meet the service requirement of the first service, the access network device may refuse to allocate a radio resource to the first service, and send, to the service application server, the first notification message used to notify the service application server that the radio channel quality of the first cell does not meet the service requirement of the to-be-established service; or hand over the UE to another cell, so that the first service is established in the another cell. In this solution, a network side may adaptively determine an admission threshold for service establishment based on a requirement. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold, for example, in a weak coverage area of network signals, the network side may adjust the service requirement or hand over the UE to another cell based on an actual network status. Therefore, after the service is established, normal execution of the service can be ensured, and user experience brought by execution of the service is improved.

In an implementation of this embodiment of this application, the first service application server may instruct, by using instruction information included in the service requirement of the to-be-established service, the access network device to directly return the first notification message to the first service application server or hand over the UE to another cell when the radio channel quality of the first cell does not meet the service requirement of the first service, that is, instruct the access network device to perform one of S805 or S807 or S808 when the radio channel quality of the first cell does not meet the service requirement of the to-be-established service.

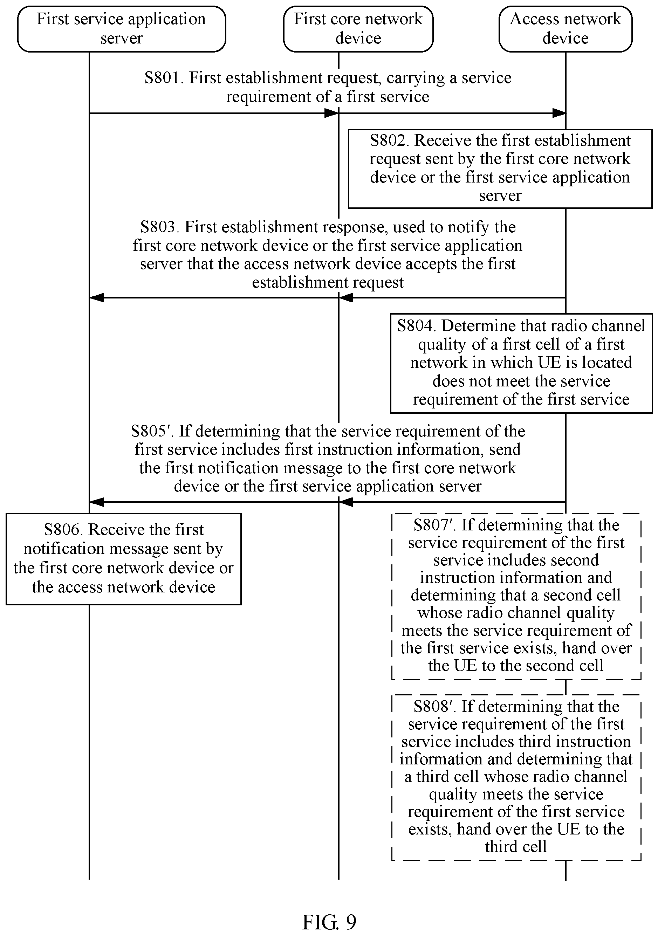

Specifically, as shown in FIG. 9, S805 in FIG. 8 may be replaced with S805', S807 may be replaced with S807', and S808 may be replaced with S808'.

S805'. If the access network device determines that the service requirement of the first service includes first instruction information, the access network device sends the first notification message to the first core network device or the first service application server.

The first instruction information is used to instruct the access network device to send the first notification message to the first core network device or the first service application server when the radio channel quality of the first cell does not meet the service requirement of the first service.

S807'. If the access network device determines that the service requirement of the first service includes second instruction information and the access network device determines that the second cell whose radio channel quality meets the service requirement of the first service exists, the access network device hands over the UE to the second cell.

The second instruction information is used to instruct the access network device to hand over the UE to the second cell when the radio channel quality of the first cell does not meet the service requirement of the first service.

S808'. If the access network device determines that the service requirement of the first service includes third instruction information and the access network device determines that the third cell whose radio channel quality meets the service requirement of the first service exists, the access network device hands over the UE to the third cell.

The third instruction information is used to instruct the access network device to hand over the UE to the third cell when the radio channel quality of the first cell does not meet the service requirement of the first service.

Further, before S803 shown in FIG. 9, the method in this embodiment of this application further includes S809.

S809. The access network device determines that the radio channel quality of the first cell meets the service requirement of the first service.

It should be noted that in this embodiment of this application, a method for determining, by the access network device, that the second cell or the third cell whose radio channel quality meets the service requirement of the first service exists is similar to the method for determining, by the access network device, that the second cell whose radio channel quality meets the service requirement of the to-be-established service exists. Details are not described again herein in this embodiment of this application.

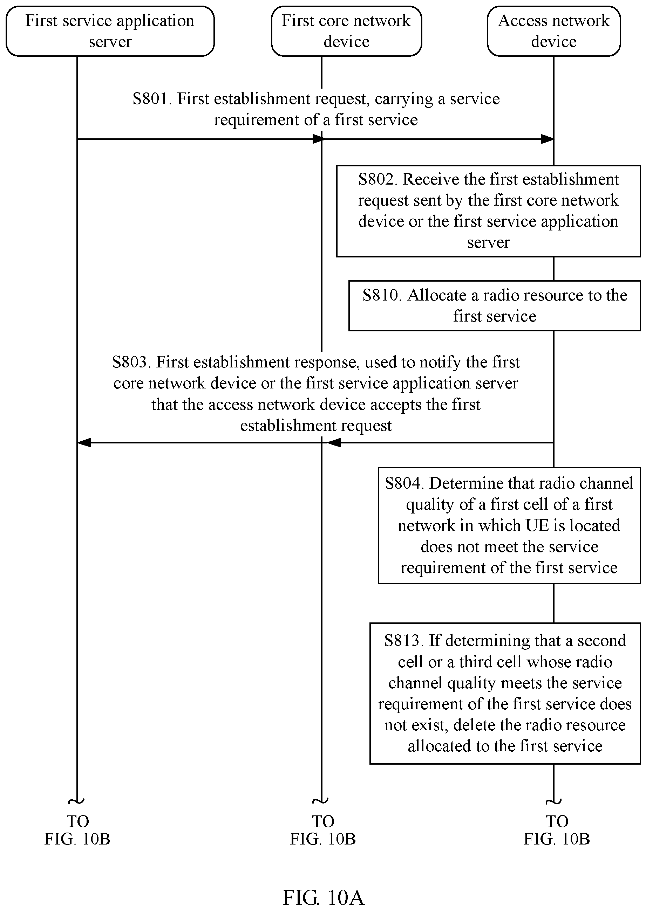

Further, as shown in FIG. 10A, after S802 shown in FIG. 9, the method in this embodiment of this application further includes S810.

S810. The access network device allocates a radio resource to the first service.

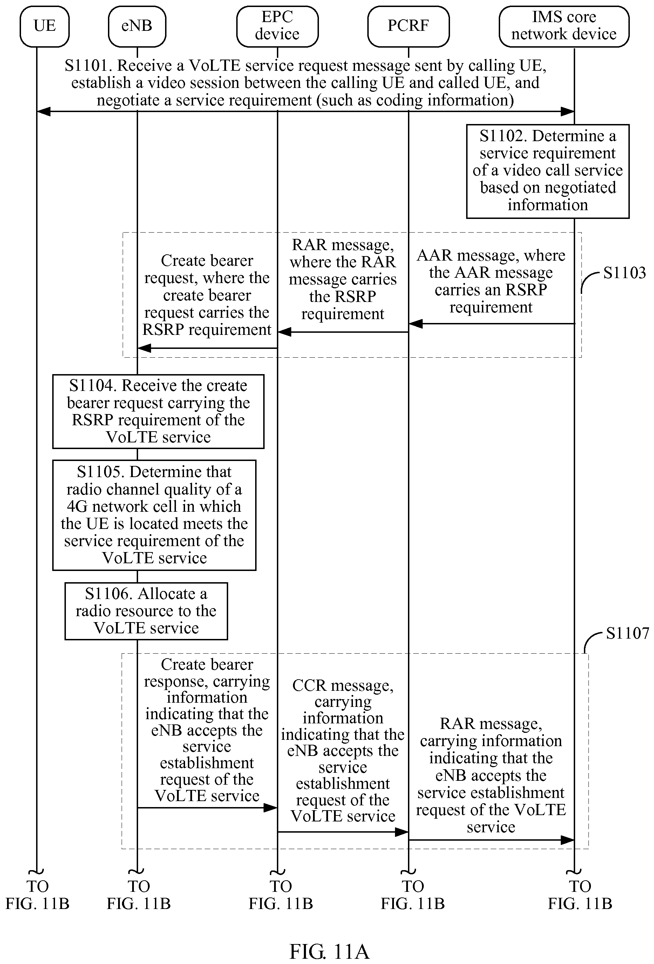

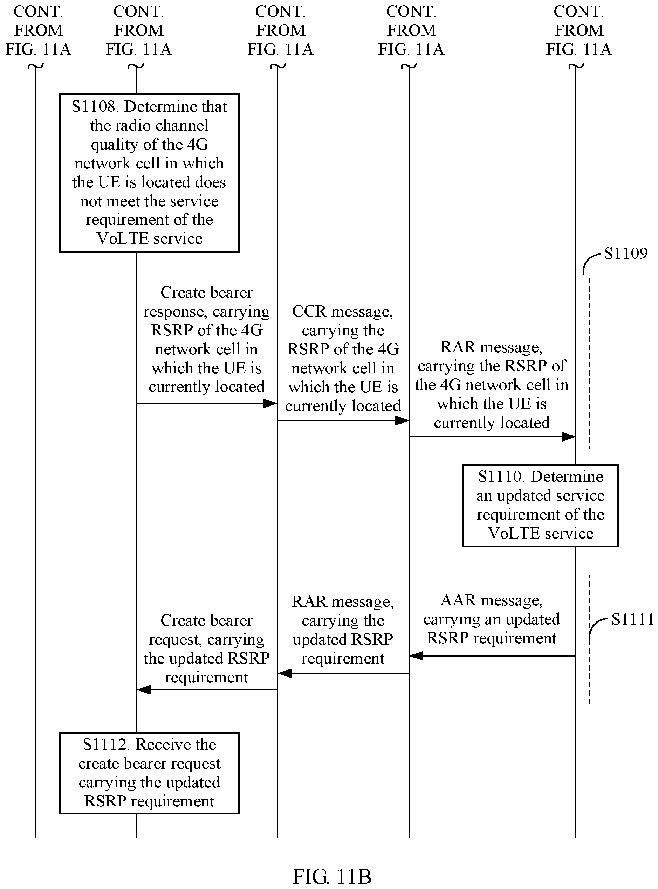

Further, when the second cell or the third cell whose radio channel quality meets the service requirement of the first service does not exist, as shown in FIG. 11, the method in this embodiment of this application may further include S811 and S812.

S811. If the access network device determines that the second cell or the third cell whose radio channel quality meets the service requirement of the first service does not exist, the access network device sends a second notification message to the first core network device or the first service application server.

The second notification message is used to notify the first core network device or the first service application server that the radio channel quality of the first cell does not meet the service requirement of the first service and that the second cell or the third cell whose radio channel quality meets the service requirement of the first service does not exist. The second notification message carries at least one of the radio channel quality of the first cell, the terminal type information of the UE, the information about the carrier frequency accessed by the UE, the location information of the UE, the load information of the first cell, the RAT information of the first network, the coding information recommended for use, and the bandwidth information of the first service.

S812. The first service application server receives the second notification message sent by the access network device or the first core network device.

Further, after S810 shown in FIG. 10A, the method in this embodiment of this application further includes S813.

S813. If the access network device determines that the second cell or the third cell whose radio channel quality meets the service requirement of the first service does not exist, the access network device deletes the radio resource allocated to the first service.

After receiving the first notification message or the second notification message, the first service application server may determine that the radio channel quality of the first cell does not meet the service requirement of the first service, and then send a first service modification request carrying an updated service requirement of the first service to the access network device. Specifically, after S805, S805', or S811, the method in this embodiment of this application may further include S814.

S814. The first service application server sends a first service modification request to the access network device or the first core network device, where the first service modification request carries an updated service requirement of the first service.

S815. The access network device receives the first service modification request sent by the first core network device or the first service application server.

It should be noted that a method for receiving, by the access network device, the first service modification request sent by the first core network device or the first service application server is similar to the method for receiving, by the access network device, the first establishment request sent by the core network device or the first service application server. Details are not described again herein in this embodiment of this application.

It may be figured out that, after the access network device receives the first service modification request, the access network device may determine whether the radio channel quality of the first cell meets the updated service requirement of the first service that is carried in the first service modification request. For a method for determining, by the access network device, whether the radio channel quality of the first cell meets the updated service requirement of the first service, refer to the foregoing method for determining, by the access network device, whether the radio channel quality of the first cell meets the service requirement of the to-be-established service. Details are not described again herein in this embodiment of this application.

The first service in this embodiment of this application is similar to the to-be-established service in the foregoing embodiment, the coding information of the first service may be first coding information, and updated coding information of the first service may be second coding information. When sending the first service modification request, the first service application server may determine that the updated coding information of the first service is the second coding information, and convert the coding information of the first service from the first coding information to the second coding information. Certainly, the first service application server may further send a second message to the UE, where the second message is used to indicate that the coding information of the first service is converted from the first coding information to the second coding information.

It may be figured out that, when the first service application server determines that a radio channel requirement corresponding to the first coding information is higher than a radio channel requirement corresponding to the second coding information, the first service application server may convert the coding information of the first service from the first coding information to the second coding information, and send the second message to the UE.

Further, the access network device may further receive another service establishment request, sent by another service application server, for establishing a service different from the first service. Specifically, the access network device may receive a second establishment request sent by a second core network device or a second service application server, where the second establishment request carries a service requirement of a second service, and the service requirement of the second service is used to indicate, to the access network device, radio channel quality required by the UE for executing the second service; and after determining that the service requirement of the second service is higher than the service requirement of the first service, the access network device may deliver a second measurement control command to the UE, where the second measurement control command is used to instruct the UE to measure the radio channel quality of the first cell and send a second measurement report to the access network device when the radio channel quality of the first cell does not meet the service requirement of the second service, where the second measurement report is used to indicate, to the access network device, that the radio channel quality of the first cell does not meet the service requirement of the second service.

It should be noted that in this embodiment of this application, the first service application server may also determine the service requirement of the first service before the first service application server sends the first establishment request carrying the service requirement of the first service to the access network device. A method for determining, by the first service application server, the service requirement of the first service is similar to the method for determining, by the service application server, the service requirement of the to-be-established service in the foregoing embodiment. Details are not described again herein in this embodiment of this application.

Certainly, before determining the service requirement of the first service, the first service application server may obtain at least one of the radio channel quality of the first cell, the terminal type information of the UE, the information about the carrier frequency accessed by the UE, the location information of the UE, the coding information of the to-be-established service, the load information of the first cell, the RAT information of the first network, and the bandwidth information of the to-be-established service (service requirement obtaining information for short) that are used to determine the service requirement of the first service. For a method for obtaining, by the first service application server, the service requirement obtaining information, refer to the related descriptions in S501 to S504 in the foregoing embodiment. Details are not described again herein in this embodiment of this application.

Further, a method for determining, by the first service application server, the updated service requirement of the first service is similar to the method for determining, by the service application server, the updated service requirement of the to-be-established service (to be specific, the related descriptions in S601 to S605) in the foregoing embodiment. Details are not described again herein in this embodiment of this application.

The following describes a service establishment method in an embodiment of this application in detail by using a procedure for establishing a VoLTE service in a 4G network as an example. In this embodiment of this application, UE may be calling UE or may be called UE in a VoLTE service; correspondingly, an access network device may be an eNB corresponding to the calling UE or an eNB corresponding to the called UE; and a service application server may be an IMS core network device (such as a P-CSCF, an S-CSCF, an SCC AS, or an ATCF) corresponding to the calling UE or an IMS core network device corresponding to the called UE.

As shown in FIG. 11A and FIG. 11B, the service establishment method provided in this embodiment of this application may include the following steps.

S1101. An IMS core network device receives a VoLTE service request message sent by calling UE, establishes a video session between the calling UE and called UE, and negotiates a service requirement (such as coding information).

S1102. The IMS core network device determines a service requirement of a VoLTE service based on at least one of a MOS requirement of the VoLTE service, radio channel quality of a cell in which the UE is located, terminal type information of the UE, information about a carrier frequency accessed by the UE, location information of the UE, coding information of the video call service, load information of the cell in which the UE is located, RAT information of the cell in which the UE is located, and bandwidth information of the video call service.

S1103. The IMS core network device sends a first establishment request of the VoLTE service to an eNB, to trigger the eNB to allocate a radio resource to the VoLTE service, where the first establishment request carries the service requirement of the VoLTE service.

S1104. The eNB receives the first establishment request of the VoLTE service.

As shown in FIG. 11A, S1104 may be specifically as follows: The eNB receives a create bearer request carrying an RSRP requirement of the VoLTE service.

It should be noted that, for detailed descriptions in S1101 to S1104 in this embodiment of this application, reference may be made to the related content in S701 to 704 in the foregoing embodiment. Details are not described again herein in this embodiment of this application.

S1105. The eNB determines that the radio channel quality of the 4G network cell in which the UE is located meets the service requirement of the VoLTE service.

For a method for determining, by the eNB, that the radio channel quality of the 4G network cell in which the UE is located meets the service requirement of the video call service, refer to the method for determining, by the eNB, whether the radio channel quality of the 4G network cell in which the UE is located meets the service requirement of the video call service in the foregoing embodiment. Details are not described again herein in this embodiment of this application.

S1106. The eNB allocates a radio resource to the VoLTE service.

S1107. The eNB sends a first establishment response to the IMS core network device.

The first establishment response is used to notify the IMS core network device that the access network device accepts the first establishment request.

FIG. 11A shows a specific implementation of this embodiment of this application in which the eNB sends the first establishment response to the IMS core network device. For detailed descriptions of the specific manner in FIG. 11A in which the eNB sends the first establishment response to the IMS core network device, refer to the related descriptions in S706 in the foregoing embodiment. Details are not described again herein in this embodiment of this application.

It should be stressed that, different from the create bearer response, the CCR message, the RAR message, or the ASR message shown in FIG. 7A, a create bearer response, a CCR message, a RAR message, or an ASR message shown in FIG. 11A carries information indicating that the eNB accepts the first establishment request (that is, the service establishment request of the VoLTE service) or information indicating that the radio resource is reserved successfully, instead of the information indicating that the eNB cannot provide the radio channel quality indicated by the service requirement of the video call service.

In addition to the implementation shown in FIG. 11A, the eNB may further send the first establishment response to the IMS core network device by using an interface between the eNB and the IMS core network device or a user plane data packet. For a method for sending, by the eNB, the first establishment response to the IMS core network device by using the interface between the eNB and the IMS core network device or the user plane data packet, refer to the related descriptions in S706 in the foregoing embodiment. Details are not described again herein in this embodiment of this application.

Further, radio channel quality of each cell in a network may change anytime, that is, after S1107, the radio channel quality of the 4G network cell in which the UE is located may change, and changed radio channel quality does not meet the service requirement of the VoLTE service. In this case, the method in this embodiment of this application may further include the following steps.

S1108. The eNB determines that the radio channel quality of the 4G network cell in which the UE is located does not meet the service requirement of the VoLTE service.

For a specific method for determining, by the eNB, that the radio channel quality of the 4G network cell in which the UE is located does not meet the service requirement of the VoLTE service, refer to the method for determining, by the eNB, that the radio channel quality of the 4G network cell in which the UE is located does not meet the service requirement of the video call service in the foregoing embodiment. Details are not described again herein in this embodiment of this application.

S1109. If the eNB determines that the service requirement of the VoLTE service includes first instruction information, the eNB sends a first notification message to the IMS core network device.

The first notification message is used to notify the IMS core network device that the radio channel quality of the 4G network cell in which the UE is located does not meet the service requirement of the VoLTE service. The first notification message carries at least one of the radio channel quality of the 4G network cell (that is, a first cell) in which the UE is located, the terminal type information of the UE, the information about the carrier frequency accessed by the UE, the location information of the UE, the load information of the 4G network cell in which the UE is located, the RAT information of the 4G network in which the UE is located, and the bandwidth information of the VoLTE service.

The first notification message in this embodiment of this application may be a new message that is not defined temporarily in a standard. Alternatively, as shown in FIG. 11B, for a specific method for sending, by the eNB, the first notification message to the IMS core network device in S1109, refer to the specific method for sending, by the eNB, the first establishment response to the IMS core network device in S706 in the foregoing embodiment. Details are not described again herein in this embodiment of this application.

Certainly, in addition to the implementation shown in FIG. 11B, the eNB may further send the first notification message to the IMS core network device by directly using the interface between the eNB and the IMS core network device. Alternatively, the eNB may further send the first notification message to the IMS core network device by using a user plane data packet.

It should be noted that, for a specific method for sending, by the eNB, the first notification message to the IMS core network device by using the interface between the eNB and the IMS core network device or the user plane data packet, reference may be made to the method for sending, by the eNB, the first establishment response to the IMS core network device by using the interface between the eNB and the IMS core network device or the user plane data packet in the foregoing second embodiment. Details are not described again herein in this embodiment of this application.

Further, the method in this embodiment of this application may further include:
if the eNB determines that the service requirement of the VoLTE service includes second instruction information, and the eNB determines that a second cell whose radio channel quality meets the service requirement of the VoLTE service exists, the eNB hands over the UE to the second cell; or
if the eNB determines that the service requirement of the VoLTE service includes third instruction information, and the eNB determines that a third cell whose radio channel quality meets the service requirement of the VoLTE service exists, the eNB hands over the UE to the third cell.

It should be noted that in this embodiment of this application, for a specific method for handing over, by the eNB, the UE to the second cell or the third cell, reference may be made to detailed descriptions in the foregoing embodiment. Details are not described again herein in this embodiment of this application.

Certainly, the second cell or the third cell whose radio channel quality meets the service requirement of the VoLTE service may not exist. In this case, as shown in FIG. 7, the method in this embodiment of this application may further include: if the eNB determines that the second cell or the third cell whose radio channel quality meets the service requirement of the VoLTE service does not exist, the eNB sends a second notification message to the IMS core network device; and the IMS core network device receives the second notification message sent by the eNB, where the second notification message is used to notify the IMS core network device that the radio channel quality of the first cell does not meet the service requirement of the VoLTE service and that the second cell or the third cell whose radio channel quality meets the service requirement of the VoLTE service does not exist, and the second notification message carries at least one of the radio channel quality of the 4G network cell (that is, the first cell) in which the UE is located, the terminal type information of the UE, the information about the carrier frequency accessed by the UE, the location information of the UE, the load information of the 4G network cell in which the UE is located, the RAT information of the 4G network in which the UE is located, and the bandwidth information of the VoLTE service.

S1110. The IMS core network device determines an updated service requirement of the VoLTE service based on the received first notification message or second notification message.

It should be noted that, for a method for determining, by the IMS core network device, the updated service requirement of the VoLTE service based on the received first notification message or second notification message, reference may be made to the method for determining, by the IMS core network device, the updated service requirement of the video call service based on the received first establishment response or second establishment response in S707. Details are not described again herein in this embodiment of this application.

S1111. The IMS core network device sends a first service modification request of the VoLTE service to the eNB, where the first service modification request carries the updated service requirement of the VoLTE service.

For example, as shown in FIG. 11B, for a specific method for sending, by the IMS core network device, the first service modification request of the VoLTE service to the eNB in S1111, refer to the specific method for sending, by the IMS core network device, the second establishment request of the video call service to the eNB in S708 in the foregoing embodiment. Details are not described again herein in this embodiment of this application.

S1112. The eNB receives the first service modification request sent by the IMS core network device.

As shown in FIG. 11B, that the eNB receives the first service modification request sent by the IMS core network device may be specifically receiving a create bearer request carrying an updated RSRP requirement.

After receiving the updated service requirement of the VoLTE service, the eNB may continue to determine whether the radio channel quality of the 4G network cell in which the UE is located meets the updated service requirement of the VoLTE service, and perform a corresponding subsequent procedure. As shown in FIG. 11B, the method in this embodiment of this application may further include S1112 and a subsequent operation. After S1112, the eNB may determine whether the radio channel quality of the 4G network cell in which the UE is located meets the updated service requirement of the VoLTE service carried in the first service modification request.

Further, in this embodiment of this application, the IMS core network device may further terminate the VoLTE service after receiving the first notification message or the second notification message. For a method for terminating, by the IMS core network device, the VoLTE service based on the first notification message or the second notification message, refer to the method for terminating, by the IMS core network device, the video call service based on the first establishment response or the second establishment response in the foregoing second embodiment. Details are not described again herein in this embodiment of this application.

In the service establishment method provided in this embodiment of this application, in the process of establishing the VoLTE service for the UE, the IMS core network device may deliver the service requirement of the VoLTE service to the eNB. The eNB may receive the service establishment request carrying the service requirement of the VoLTE service. Correspondingly, the eNB may use the received service requirement of the VoLTE service as an admission threshold for establishing the VoLTE service. To be specific, when radio signal quality of the cell in which the UE is located does not meet the service requirement of the VoLTE service, the eNB may refuse to allocate a radio resource to the VoLTE service, and notify the IMS core network device, so that the IMS core network device correspondingly adjusts the service requirement of the VoLTE service, and that the VoLTE service is established in the cell; or the eNB may hand over the UE to another 4G cell or 2G/3G cell that can meet the service requirement, so that the VoLTE service is established in the another cell. In this solution, a network side may adaptively determine the admission threshold for service establishment based on a requirement. Therefore, a problem that an admission threshold determined merely based on an empirical value in a solution of the prior art is erroneous and lacks flexibility or the like is avoided. In addition, in a scenario in which signal quality of the cell in which the UE is located does not reach the admission threshold, for example, in a weak coverage area of network signals, the network side may adjust the service requirement or hand over the UE to another cell based on an actual network status. Therefore, after the service is established, normal execution of the service can be ensured, and user experience brought by execution of the service is improved.

It should be noted that, in the foregoing embodiment, the VoLTE service of the 4G network is used merely as an example to describe the service establishment method provided in this embodiment of this application.

Further, after the VoLTE service is successfully established between the calling UE and the IMS core network device (which is marked as an IMS core network device 1, and may be the first service application server in the foregoing embodiment) responsible for the VoLTE service and the called UE, the calling UE may store the service requirement of the VoLTE service that is delivered by the IMS core network device responsible for the VoLTE service, as a threshold for measurement reporting. In this embodiment of this application, an IMS core network device responsible for a second service (such as a video call service) is marked as an IMS core network device 2, and may be the second service application server in the foregoing embodiment. The VoLTE service is the first service in the foregoing embodiment, and the video call service is the second service in the foregoing embodiment. Specifically, the method in this embodiment of this application may further include S1201.

S1201. An IMS core network device 2 sends a second establishment request to the eNB, to trigger the eNB to allocate a radio resource to a video call service, where the second establishment request carries a service requirement of the video call service.

S1202. The eNB receives the second establishment request sent by the IMS core network device 2.

S1203. The eNB determines that the service requirement of the VoLTE service is lower than the service requirement of the video call service.

For example, assuming that the service requirement of the VoLTE service and the service requirement of the video call service are both RSRP requirements, the eNB may directly compare the RSRP requirement of the VoLTE service with the RSRP requirement of the video call service. Assuming that the RSRP requirement of the VoLTE service is -115 dBm, and that the RSRP requirement of the video call service is -110 dBm, the eNB determines that the service requirement of the VoLTE service is lower than the service requirement of the video call service.

Alternatively, when specific parameters of the service requirement of the VoLTE service and the service requirement of the video call service are different, for example, when the service requirement of the VoLTE service is an RSRP requirement (specifically, -115 dBm), but the service requirement of the video call service is an SINR requirement (specifically, 3 dBm), the eNB may first map the SINR requirement of the video call service to an RSRP requirement (such as -110 dBm), or may first map the RSRP requirement of the VoLTE service to an SINR requirement (such as 2 dBm), and then perform comparison.

S1204. The eNB determines that the radio channel quality of the 4G cell in which the UE is currently located cannot meet the service requirement of the video call service.

After S1204, S1109 and a subsequent procedure may continue to be performed.

In the service establishment method provided in this embodiment of this application, in a scenario in which the UE performs both the VoLTE service and the video call service, the eNB may compare the service requirements of the two services, and select a higher service requirement, for example, the service requirement of the video call service, as the threshold for measurement reporting of the UE. This helps the eNB determine, in a timely manner, whether downlink radio channel quality of the cell in which the UE is located reaches a handover threshold corresponding to a service requirement of a current service (such as the video call service), and can trigger, in a timely manner, a handover of the UE to another cell that meets the requirement of the video call service or instruct the service application server to modify a service requirement of a corresponding service in a timely manner. In addition, if the service requirement of the video call service is higher than the service requirement of the VoLTE service, and the downlink radio channel quality of the cell in which the UE is located meets the service requirement of the video call service, the downlink radio channel quality of the cell in which the UE is located can definitely meet the service requirement of the VoLTE service. Therefore, normal execution of the VoLTE service is ensured, and voice call quality of the VoLTE service can be ensured.

It should be noted that in this embodiment of this application, execution of both the VoLTE service and the video call service is used merely as an example to describe the method in this embodiment of this application. Certainly, the method in this embodiment of this application may be further extended to other services.

Further, in this embodiment of this application, the IMS core network device may further update the service requirement of the VoLTE service in real time.

For example, parameters affecting the service requirement of the VoLTE service include but are not limited to the radio channel quality (such as the RSRP, the RSRQ, and the SINR) of the 4G network cell in which the UE is located, the location information of the UE, the information about the carrier frequency accessed by the UE, time information, the load information of the 4G network cell in which the UE is located, the coding information of the VoLTE service, the bandwidth information of the VoLTE service, and the like. The IMS core network device may update the service requirement of the VoLTE service in real time based on a change of the foregoing parameters. Certainly, before updating the service requirement of the VoLTE service in real time, the IMS core network device may obtain, from the UE, the parameters affecting the service requirement of the VoLTE service.

It may be figured out that, to adapt to a change of a quantity of network users, the IMS core network device may further deliver different service requirements for the VoLTE service to the eNB in different time periods. For example, an RSRP requirement delivered within a busy time (for example, daytime when there are a large quantity of users) may be -110 dBm, and an RSRP requirement delivered within an idle time (nighttime when there are few users) may be -120 dBm. When detecting that the time information changes from the busy time to the idle time, the IMS core network device may determine that the RSRP requirement may be updated from -110 dBm to -120 dBm.

Alternatively, when the coding information negotiated between the calling UE and the IMS core network device and the called UE changes, the IMS core network device may further update the service requirement of the VoLTE service to a service requirement corresponding to current coding information.

Alternatively, the IMS core network device may further update the service requirement of the VoLTE service in real time based on a change of a MOS of the VoLTE service. For example, if a current MOS of the VoLTE service is 3.5 and is lower than a preset MOS requirement value 4 of the VoLTE service, the IMS core network device may update the service requirement of the VoLTE service to a service requirement corresponding to the MOS 3.5.

In the service establishment method provided in this embodiment of this application, the service requirement of the VoLTE service may be updated in real time. Therefore, normal execution of the VoLTE service is ensured, and voice call quality of the VoLTE service can be ensured.

The solutions provided in the embodiments of this application are described above mainly from a perspective of interaction between devices such as the access network device, the service application server, and the core network device. It may be understood that, to implement the foregoing functions, the access network device and the service application server include corresponding hardware structures and/or software modules for performing the functions. A person skilled in the art should be easily aware that, this application can be implemented by hardware or a combination of hardware and computer software with reference to the access network device and the service application server and algorithm steps in the examples described in the embodiments disclosed in this specification. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, modules or units in the access network device and the service application server may be defined based on the foregoing method examples. For example, each module or unit may be defined in a correspondence to each function, or two or more functions may be integrated in one processing module. Division of modules or units in the embodiments of this application is merely an example, and is only division of logical functions. Other division manners may be available in actual implementations.

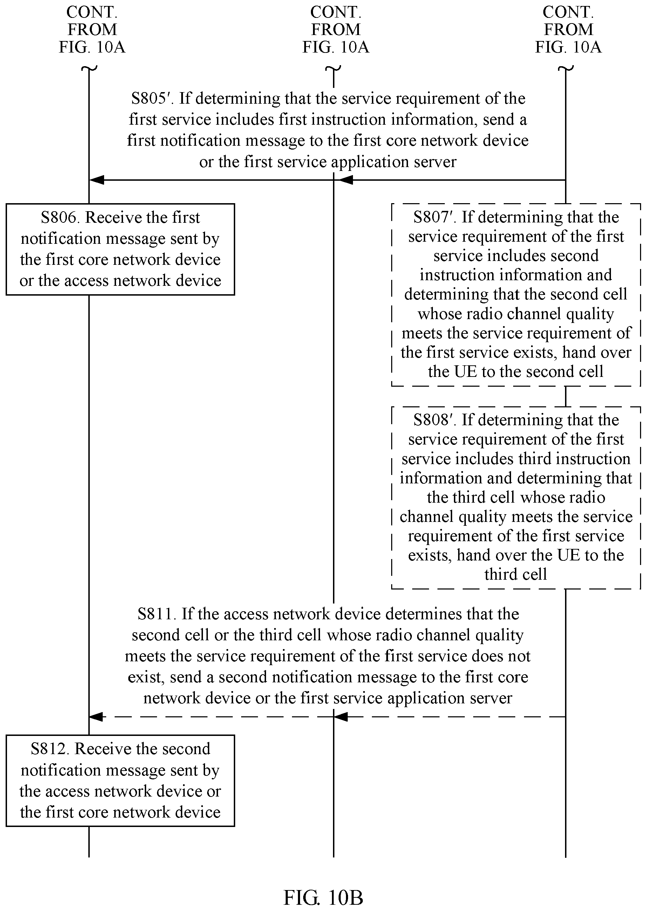

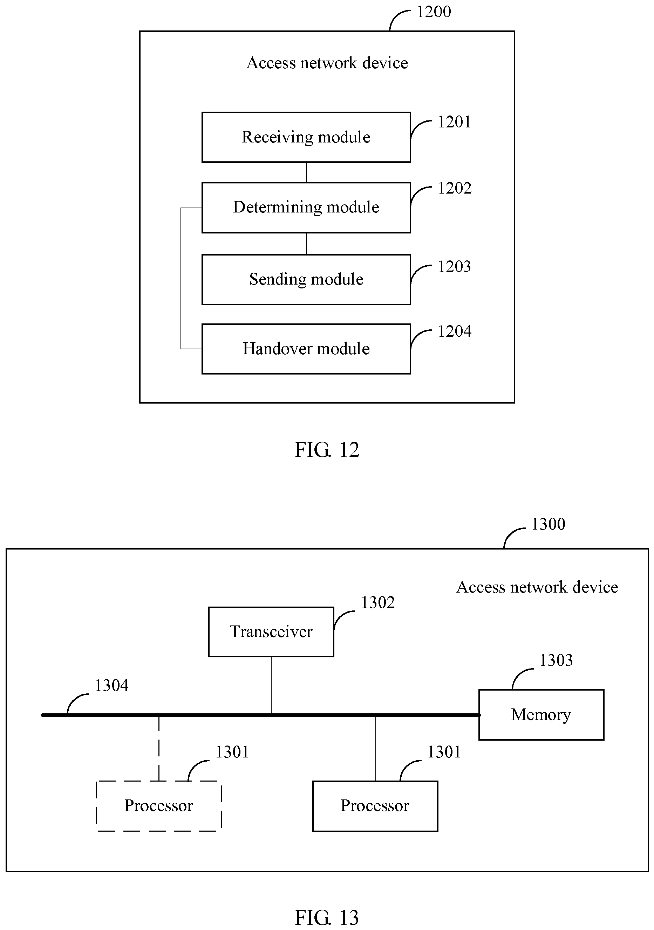

FIG. 12 is a possible schematic structural diagram of an access network device in the foregoing embodiment. The access network device 1200 includes a receiving module 1201, a determining module 1202, a sending module 1203, and a handover module 1204. The receiving module 1201 is configured to receive a request message or another type of message sent by a device such as a service application server, a core network device, and UE. For example, the receiving module 1201 is configured to support S302 in any one of FIG. 3 to FIG. 6A, S311 in FIG. 6B, S704 and S709 in FIG. 7A and FIG. 7B, S802 in any one of FIG. 8 to FIG. 10A, and S1104 and S1112 in FIG. 11A and FIG. 11B, and/or is used in other processes in the technology described in the specification. The determining module 1202 is configured to determine whether radio channel quality of a first cell of a first network in which the UE is located meets a service requirement of a to-be-established service. For example, the determining module 1202 is configured to support S303 in any one of FIG. 3 to FIG. 6A, S705 and S710 in FIG. 7A and FIG. 7B, S804 in any one of FIG. 8 to FIG. 10A, and S1105 and S1108 in FIG. 11A and FIG. 11B, and/or is used in other processes in the technology described in the specification. The sending module 1203 is configured to send a response message, a query message, or another type of message to the device such as the service application server, the core network device, and the UE. For example, the sending module 1203 is configured to support S304 in FIG. 3, S304' in any one of FIG. 4 to FIG. 6A, S308 in FIG. 5B, or FIG. 6B, S706 and S711 in FIG. 7A and FIG. 7B, S803 and S805 in FIG. 8, S803 and S805' in FIG. 9, S803, S811, and S805' in FIG. 10B, and S1107 and S1109 in FIG. 11A and FIG. 11B, and/or is used in other processes of the technology described in this specification. The handover module 1204 is configured to hand over the UE when the determining module 1202 determines that the radio channel quality of the first cell does not meet the service requirement of the to-be-established service. For example, the handover module 1204 is configured to support S306 and S307 in FIG. 3, S306' and S307' in any one of FIG. 4 to FIG. 6B, S807 and S808 in FIG. 8, and S807' and S808' in FIG. 9 or FIG. 10B, and/or is used in other processes in the technology described in the specification.

Certainly, the access network device 1200 includes but is not limited to the illustrated functional modules. For example, the access network device 1200 may further include an allocation module configured to allocate a radio resource to the UE when the determining module 1202 determines that the radio channel quality of the first cell meets the service requirement of the to-be-established service, and a deletion module configured to delete, when the determining module 1202 determines that the radio channel quality of the first cell does not meet the service requirement of the to-be-established service, the radio resource allocated by the allocation module to the UE. In addition, functions that the functional modules can specifically implement include but are not limited to the functions corresponding to the method steps in the foregoing embodiment. For other functional units of the access network device 1200 and detailed descriptions of the functional units of the access network device 1200, refer to the detailed descriptions of the method steps corresponding to the functional units. Details are not described again herein in this embodiment of this application.

The module may be implemented in a form of hardware, or may be implemented in a form of a software functional module or a functional unit.

When an integrated unit is used, functional modules such as the determining module 1202, the handover module 1204, the allocation module, and the deletion module may be integrated in one processing unit for implementation. The processing unit may be a processor or a controller, for example, may be a CPU, a general purpose processor, a digital signal processor (English: Digital Signal Processor, DSP for short), an application-specific integrated circuit (English: Application-Specific Integrated Circuit, ASIC for short), a field programmable gate array (English: Field Programmable Gate Array, FPGA for short) or another programmable logic device, a transistor logic device, a hardware component, or any combination thereof. The processing unit may implement or execute various example logical blocks, modules, and circuits described with reference to content disclosed in this application. Alternatively, the processing unit may be a combination of processing units implementing a computing function, for example, a combination of one or more microprocessors, or a combination of the DSP and a microprocessor. The receiving module 1201 and the sending module 1203 may be integrated in a communications unit for implementation, where the communications unit may be a communications interface, a transceiver circuit, a transceiver, or the like.

When the processing unit is a processor, and the communications unit is a communications interface, the access network device 1200 in this embodiment of this application may be an access network device 1300 shown in FIG. 13. As shown in FIG. 13, the access network device 1300 includes one or more processors 1301, a transceiver 1302, a memory 1303, and a bus 1304. The processor 1301, the transceiver 1302, and the memory 1303 are interconnected by the bus 1304. The memory is configured to store one or more application programs. The one or more application programs include an instruction. When the processor 1301 of the access network device 1300 executes the instruction, the access network device 1300 performs the related method steps in any one of FIG. 3 to FIG. 11B, and interacts with a device such as a service application server to implement the service establishment method in the foregoing embodiment.

The bus 1304 may be a peripheral component interconnect (English: Peripheral Component Interconnect, PCI for short) bus, an extended industry standard architecture (English: Extended Industry Standard Architecture, EISA for short) bus, or the like. The bus 1304 may be classified into an address bus, a data bus, a control bus, and the like. For ease of representation, only one thick line is used to represent the bus in FIG. 13, but this does not mean that there is only one bus or only one type of bus.

An embodiment of this application further provides a nonvolatile storage medium. The nonvolatile storage medium stores one or more pieces of program code. When the processor 1301 of the access network device 1300 executes the program code, the access network device 1300 performs the related method steps in any one of FIG. 4 to FIG. 11B, and interacts with a device such as a service application server to implement the service establishment method in the foregoing embodiment.

For detailed descriptions of the functional units or functional modules in the access network device provided in this embodiment of this application and technical effects brought by performing related method steps in any one of FIG. 4 to FIG. 11B by the functional units or functional modules, refer to related descriptions in the method embodiment of this application. Details are not described again herein.

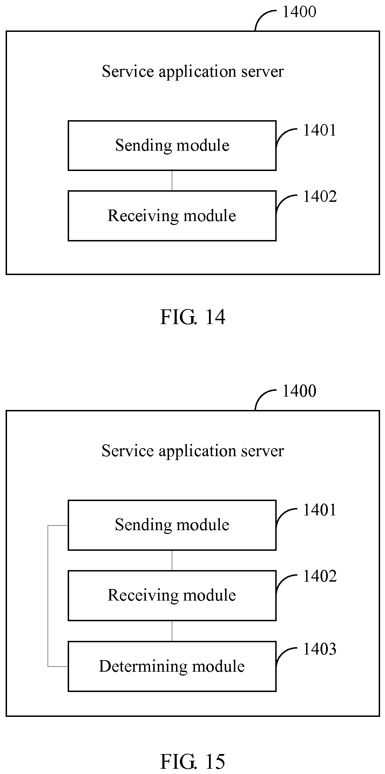

FIG. 14 is a possible schematic structural diagram of a service application server in the foregoing embodiment. The service application server 1400 includes a sending module 1401 and a receiving module 1402. The sending module 1401 is configured to send a request message or another type of message to a device such as an access network device, a core network device, and UE. For example, the sending module 1401 is configured to support S301 in any one of FIG. 3 to FIG. 6A, S310 in FIG. 6B, S703 and S708 in FIG. 7A and FIG. 7B, S801 in anyone of FIG. 8 to FIG. 10A, and S1103 and S1111 in FIG. 11A and FIG. 11B, and/or is used in other processes in the technology described in the specification. The receiving module 1402 is configured to receive a response message, a query message, or another type of message sent by the device such as the access network device, the core network device, and the UE. For example, the receiving module 1402 is configured to support S305 in any one of FIG. 3 to FIG. 6A, S309 in FIG. 5B or FIG. 6B, S707 in FIG. 7B, S806 in FIG. 8 to FIG. 10B, S812 in FIG. 10B, and S1107 and S1109 in FIG. 11A and FIG. 11B, and/or is used in other processes in the technology described in the specification.

Further, as shown in FIG. 15, the service application server 1400 may further include a determining module 1403. The determining module 1403 is configured to determine a service requirement of a to-be-established service or an updated service requirement of a to-be-established service. For example, the determining module 1403 is configured to support S702 and S707 in FIG. 7A and FIG. 7B, and S1102 and S1110 in FIG. 11A and FIG. 11B, and/or used in other processes in the technology described in this specification. Certainly, the receiving module 1402 may be further configured to receive related information used by the determining module 1403 to determine the service requirement of the to-be-established service or the updated service requirement of the to-be-established service.

Certainly, the service application server 1400 includes but is not limited to the foregoing illustrated functional modules. For example, the service application server 1400 may further include a conversion module configured to convert coding information. In addition, functions that the functional modules can specifically implement include but are not limited to the functions corresponding to the method steps in the foregoing embodiment. For other functional units of the service application server 1400 and detailed descriptions of the functional units of the service application server 1400, refer to the detailed descriptions of the method steps corresponding to the functional units. Details are not described again herein in this embodiment of this application.

When an integrated unit is used, functional modules such as the determining module 1403, and the conversion module may be integrated in one processing unit for implementation. The processing unit may be a processor or a controller, for example, may be a CPU, a general purpose processor, a DSP), an ASIC, an FPGA or another programmable logic device, a transistor logic device, a hardware component, or any combination thereof. The processing unit may implement or execute various example logical blocks, modules, and circuits described with reference to content disclosed in this application. Alternatively, the processing unit may be a combination of processing units implementing a computing function, for example, a combination of one or more microprocessors, or a combination of the DSP and a microprocessor. The sending module 1401 and the receiving module 1402 may be integrated in a communications unit for implementation, where the communications unit may be a communications interface, a transceiver circuit, a transceiver, or the like.

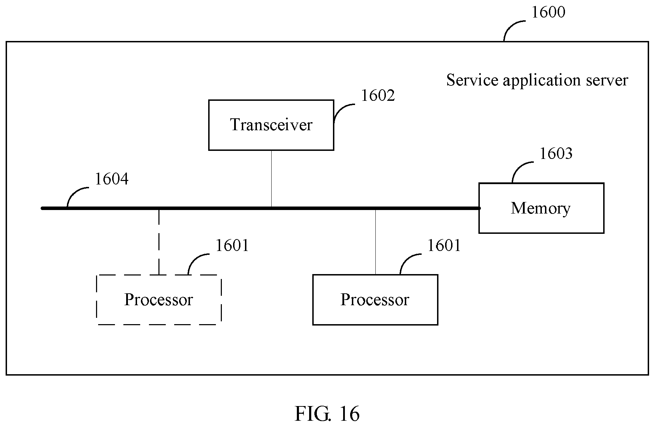

When the processing unit is a processor, and the communications unit is a communications interface, the service application server 1400 in this embodiment of this application may be a service application server 1600 shown in FIG. 16. As shown in FIG. 16, the service application server 1600 includes one or more processors 1601, a transceiver 1602, a memory 1603, and a bus 1604. The processor 1601, the transceiver 1602, and the memory 1603 are interconnected by the bus 1604. The memory is configured to store one or more application programs. The one or more application programs include an instruction. When the processor 1601 of the service application server 1600 executes the instruction, the service application server 1600 performs the related method steps in any one of FIG. 3 to FIG. 11B, and interacts with a device such as a service application server to implement the service establishment method in the foregoing embodiment.

The bus 1604 may be a PCI bus, an EISA bus, or the like. The bus 1604 may be classified into an address bus, a data bus, a control bus, and the like. For ease of representation, only one thick line is used to represent the bus in FIG. 16, but this does not mean that there is only one bus or only one type of bus.

An embodiment of this application further provides a nonvolatile storage medium. The nonvolatile storage medium stores one or more pieces of program code. When the processor 1601 of the service application server 1600 executes the program code, the service application server 1600 performs the related method steps in any one of FIG. 4 to FIG. 11B, and interacts with a device such as a service application server to implement the service establishment method in the foregoing embodiment.

For detailed descriptions of the functional units or functional modules in the service application server provided in this embodiment of this application and technical effects brought by performing related method steps in any one of FIG. 4 to FIG. 11B by the functional units or functional modules, refer to related descriptions in the method embodiment of this application. Details are not described again herein.

The foregoing descriptions of implementations allow a person skilled in the art to clearly understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (English: processor) to perform all or some of the steps of the methods described in the embodiments of this application. The foregoing storage medium includes: any medium that can store program code, such as a USB flash drive, a removable hard disk, a read-only memory (English: Read-Only Memory, ROM for short), a random access memory (English: Random Access Memory, RAM for short), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service establishment method, comprising:
receiving, by an access network device, a first establishment request sent by a core network device or a service application server, wherein the first establishment request carries a service requirement of a to-be-established service, and the service requirement of the to-be-established service is used to indicate, to the access network device, radio channel quality required by user equipment UE for executing the to-be-established service; and
when the access network device determines that radio channel quality of a first cell of a first network in which the UE is located does not meet the service requirement of the to-be-established service, sending, by the access network device, a first establishment response to the core network device or the service application server, wherein the first establishment response is used to notify the core network device or the service application server that the radio channel quality of the first cell does not meet the service requirement of the to-be-established service; or
handing over the UE to a second cell of the first network; or
handing over the UE to a third cell of a second network.

2. The method according to claim 1, wherein the sending, by the access network device, a first establishment response to the core network device or the service application server comprises:
if the access network device determines that the service requirement of the to-be-established service comprises first instruction information, sending the first establishment response to the core network device or the service application server, wherein
the first instruction information is used to instruct the access network device to send the first establishment response to the core network device or the service application server when the radio channel quality of the first cell does not meet the service requirement of the to-be-established service.

3. The method according to claim 1, wherein the handing over, by the access network device, the UE to a second cell of the first network comprises:
if the access network device determines that the service requirement of the to-be-established service comprises second instruction information and the access network device determines that the second cell whose radio channel quality meets the service requirement of the to-be-established service exists, handing over, by the access network device, the UE to the second cell, wherein
the second instruction information is used to instruct the access network device to hand over the UE to the second cell when the radio channel quality of the first cell does not meet the service requirement of the to-be-established service.

4. The method according to claim 1, wherein the handing over, by the access network device, the UE to a third cell of a second network comprises:
if the access network device determines that the service requirement of the to-be-established service comprises third instruction information and the access network device determines that the third cell whose radio channel quality meets the service requirement of the to-be-established service exists, handing over, by the access network device, the UE to the third cell, wherein
the third instruction information is used to instruct the access network device to hand over the UE to the third cell when the radio channel quality of the first cell does not meet the service requirement of the to-be-established service.

5. The method according to claim 3 or 4, wherein the method further comprises:
if the access network device determines that the second cell or the third cell whose radio channel quality meets the service requirement of the to-be-established service does not exist, sending, by the access network device, a second establishment response to the core network device or the service application server, wherein
the second establishment response is used to notify the core network device or the service application server that the radio channel quality of the first cell does not meet the service requirement of the to-be-established service and that the second cell or the third cell whose radio channel quality meets the service requirement of the to-be-established service does not exist.

6. The method according to claim 1 or 2, wherein the first establishment response carries at least one of the radio channel quality of the first cell, terminal type information of the UE, information about a carrier frequency accessed by the UE, location information of the UE, load information of the first cell, coding information recommended for use, radio access technology RAT information of the first network, and bandwidth information of the to-be-established service.

7. The method according to any one of claims 1 to 6, wherein after the sending, by the access network device, the first establishment response or the second establishment response to the core network device or the service application server, the method further comprises:
receiving, by the access network device, a second establishment request sent by the core network device or the service application server, wherein the second establishment request carries an updated service requirement of the to-be-established service.

8. The method according to any one of claims 3 to 5, wherein a method for determining, by the access network device, that the second cell or the third cell whose radio channel quality meets the service requirement of the to-be-established service exists comprises:
delivering, by the access network device, a measurement control command to the UE, wherein the measurement control command is used to instruct the UE to measure the radio channel quality of the second cell or the third cell;
receiving, by the access network device, a measurement report reported by the UE, wherein the measurement report carries a measurement result obtained by the UE by measuring the radio channel quality of the second cell or the third cell; and
determining, by the access network device based on the measurement result, that the second cell or the third cell whose radio channel quality meets the service requirement of the to-be-established service exists; or
delivering, by the access network device, a measurement control command to the UE, wherein the measurement control command carries a measurement reporting condition determined based on the service requirement of the to-be-established service, the measurement control command is used to instruct the UE to measure the radio channel quality of the second cell or the third cell, and the measurement reporting condition is used to instruct the UE to report a measurement report to the access network device when the UE determines that the radio channel quality of the second cell or the third cell meets the measurement reporting condition; and
if the access network device receives the measurement report reported by the UE, determining, by the access network device, that the second cell or the third cell whose radio channel quality meets the service requirement of the to-be-established service exists.

9. The method according to any one of claims 1 to 8, wherein the service requirement of the to-be-established service comprises at least one of service type indication information of the to-be-established service, a radio channel requirement of the to-be-established service, coding information of the to-be-established service, a coding information list of the UE, and a terminal type of the UE, wherein
the coding information list of the UE comprises coding information supported by both the UE and the service application server.

10. The method according to claim 9, wherein the determining, by the access network device, that radio channel quality of a first cell of a first network in which the UE is located does not meet the service requirement of the to-be-established service comprises:
determining, by the access network device, that the radio channel quality of the first cell meets radio channel quality required by at least one type of coding information in the coding information list of the UE, but the radio channel quality of the first cell does not meet radio channel quality required by the coding information of the to-be-established service.

11. A service establishment method, comprising:
sending, by a service application server, a first establishment request to an access network device or a core network device, wherein the first establishment request carries a service requirement of a to-be-established service, and the service requirement of the to-be-established service is used to indicate, to the access network device or the core network device, radio channel quality required by user equipment UE for executing the to-be-established service; and
receiving, by the service application server, a first establishment response sent by the access network device or the core network device, wherein the first establishment response is used to notify the service application server that radio channel quality of a first cell of a first network in which the UE is located does not meet the service requirement of the to-be-established service; or
receiving, by the service application server, a second establishment response sent by the access network device or the core network device, wherein the second establishment response is used to notify the service application server that radio channel quality of a first cell of a first network in which the UE is located does not meet the service requirement of the to-be-established service and that a second cell or a third cell whose radio channel quality meets the service requirement of the to-be-established service does not exist, wherein the second cell is located in the first network, and the third cell is located in a second network.

12. The method according to claim 11, wherein before the sending, by a service application server, a first establishment request to an access network device, the method further comprises:
determining, by the service application server, the service requirement of the to-be-established service based on at least one of a mean opinion score MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, radio access technology RAT information of the first network, and bandwidth information of the to-be-established service; or
sending, by the service application server, a first query request to a third-party network device, wherein the first query request carries at least one of a MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; and
receiving, by the service application server, the first query response sent by the third-party network device, wherein the first query response carries the service requirement of the to-be-established service.

13. The method according to claim 11 or 12, wherein before the determining, by the service application server, the service requirement of the to-be-established service, or the receiving, by the service application server, the first query response sent by the third-party network device, the method further comprises:
sending, by the service application server, a second query request to the core network device or the UE or the access network device; and
receiving, by the service application server, a second query response sent by the core network device or the UE or the access network device, wherein the second query response carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

14. The method according to claim 11 or 12, wherein before the determining, by the service application server, the service requirement of the to-be-established service, or the receiving, by the service application server, the first query response sent by the third-party network device, the method further comprises:
receiving, by the service application server, a first message sent by the UE, wherein the first message carries at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service.

15. The method according to any one of claims 11 to 14, wherein the service requirement of the to-be-established service comprises first instruction information, and the first instruction information is used to instruct the access network device to send the first establishment response to the first service application server when the radio channel quality of the first cell does not meet the service requirement of the to-be-established service.

16. The method according to any one of claims 12 to 15, wherein the service requirement of the to-be-established service comprises second instruction information, and the second instruction information is used to instruct the access network device to hand over the UE to the second cell of the first network when the radio channel quality of the first cell does not meet the service requirement of the to-be-established service.

17. The method according to any one of claims 14 to 17, wherein the service requirement of the to-be-established service comprises third instruction information, and the third instruction information is used to instruct the access network device to hand over the UE to the third cell of the second network when the radio channel quality of the first cell does not meet the service requirement of the to-be-established service.

18. The method according to any one of claims 11 to 17, wherein the first establishment response carries at least one of the radio channel quality of the first cell, the terminal type information of the UE, the information about the carrier frequency accessed by the UE, the location information of the UE, the load information of the first cell, the coding information recommended for use, the RAT information of the first network, and the bandwidth information of the to-be-established service.

19. The method according to claim 18, wherein before the receiving, by the service application server, the first establishment response or the second establishment response sent by the access network device, the method further comprises:
determining, by the service application server, an updated service requirement of the to-be-established service based on the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, wherein the coding information list of the UE comprises coding information supported by both the UE and the service application server; or
sending, by the service application server, a third query request to the third-party network device, wherein the third query request carries the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, wherein the coding information list of the UE comprises coding information supported by both the UE and the service application server; and
receiving, by the service application server, the third query response sent by the third-party network device, wherein the first query response carries an updated service requirement of the to-be-established service.

20. The method according to claim 19, wherein after the determining, by the service application server, an updated service requirement of the to-be-established service, or receiving the third query response sent by the third-party network device, the method further comprises:
sending, by the service application server, a second establishment request to the access network device or the core network device, wherein the second establishment request carries the updated service requirement of the to-be-established service.

21. The method according to any one of claims 18 to 20, wherein after the receiving, by the service application server, the first establishment response or the second establishment response sent by the access network device, the method further comprises:
determining, by the service application server, to terminate the to-be-established service, based on at least one of the radio channel quality of the first cell, the terminal type information of the UE, the information about the carrier frequency accessed by the UE, the location information of the UE, the coding information of the to-be-established service, the load information of the first cell, the coding information recommended for use, the RAT information of the first network, and the bandwidth information of the to-be-established service that are carried in the first establishment response or the second establishment response; and
sending, by the service application server, a message for deleting the to-be-established service to the UE, wherein the message for deleting the to-be-established service is used to instruct the UE to terminate the to-be-established service.

22. The method according to any one of claims 11 to 21, wherein the service requirement of the to-be-established service comprises at least one of the service type indication information of the to-be-established service, a radio channel requirement of the to-be-established service, the coding information of the to-be-established service, the coding information list of the UE, and a terminal type of the UE, wherein the coding information list of the UE comprises the coding information supported by both the UE and the service application server.

23. The method according to any one of claims 19 to 22, wherein updated coding information of the to-be-established service that is comprised in the updated service requirement of the to-be-established service is second coding information; and
the method further comprises:
determining, by the service application server, that the coding information of the to-be-established service is first coding information;
determining, by the service application server, that the updated coding information of the to-be-established service is the second coding information; and
converting, by the service application server, the coding information of the to-be-established service from the first coding information to the second coding information.

24. The method according to claim 23, further comprising:
sending, by the service application server, a second message to the UE, wherein the second message is used to indicate that the coding information of the to-be-established service is converted from the first coding information to the second coding information.

25. The method according to claim 23 or 24, further comprising:
determining, by the service application server, that a radio channel requirement corresponding to the first coding information is higher than a radio channel requirement corresponding to the second coding information.

26. An access network device, comprising:
a receiver, configured to receive a first establishment request sent by a core network device or a service application server, wherein the first establishment request carries a service requirement of a to-be-established service, and the service requirement of the to-be-established service is used to indicate, to the access network device, radio channel quality required by user equipment UE for executing the to-be-established service;
a processor, configured to determine whether radio channel quality of a first cell of a first network in which the UE is located meets the service requirement of the to-be-established service; and
a transmitter, further configured to send a first establishment response to the core network device or the service application server when the processor determines that the radio channel quality of the first cell of the first network in which the UE is located does not meet the service requirement of the to-be-established service, wherein the first establishment response is used to notify the core network device or the service application server that the radio channel quality of the first cell does not meet the service requirement of the to-be-established service; wherein
alternatively, the processor is further configured to hand over the UE to a second cell of the first network, or hand over the UE to a third cell of a second network.

27. The access network device according to claim 26, wherein that the transmitter is configured to send the first establishment response to the core network device or the service application server is specifically:
the transmitter is further configured to send the first establishment response to the core network device or the service application server when the service requirement of the to-be-established service comprises first instruction information, wherein
the first instruction information is used to instruct the access network device to send the first establishment response to the core network device or the service application server when the radio channel quality of the first cell does not meet the service requirement of the to-be-established service.

28. The access network device according to claim 26, wherein that the processor is configured to hand over the UE to the second cell is specifically:
the processor is configured to hand over the UE to the second cell when the service requirement of the to-be-established service comprises second instruction information and the second cell whose radio channel quality meets the service requirement of the to-be-established service exists, wherein
the second instruction information is used to instruct the access network device to hand over the UE to the second cell when the radio channel quality of the first cell does not meet the service requirement of the to-be-established service.

29. The access network device according to claim 26, wherein that the processor hands over the UE to the third cell of the second network is specifically:
the processor is configured to hand over the UE to the third cell if the service requirement of the to-be-established service comprises third instruction information and the third cell whose radio channel quality meets the service requirement of the to-be-established service exists, wherein
the third instruction information is used to instruct the access network device to hand over the UE to the third cell when the radio channel quality of the first cell does not meet the service requirement of the to-be-established service.

30. The access network device according to claim 28 or 29, wherein the transmitter is further configured to send a second establishment response to the core network device or the service application server if the second cell or the third cell whose radio channel quality meets the service requirement of the to-be-established service does not exist, wherein
the second establishment response is used to notify the core network device or the service application server that the radio channel quality of the first cell does not meet the service requirement of the to-be-established service and that the second cell or the third cell whose radio channel quality meets the service requirement of the to-be-established service does not exist.

31. The access network device according to any one of claims 26 to 30, wherein the first establishment response carries at least one of the radio channel quality of the first cell, terminal type information of the UE, information about a carrier frequency accessed by the UE, location information of the UE, load information of the first cell, coding information recommended for use, radio access technology RAT information of the first network, and bandwidth information of the to-be-established service.

32. The access network device according to any one of claims 26 to 31, wherein after the transmitter sends the first establishment response or the second establishment response to the core network device or the service application server, the receiver is further configured to receive a second establishment request sent by the core network device or the service application server, wherein the second establishment request carries an updated service requirement of the to-be-established service.

33. A service application server, comprising:
a transmitter, configured to send a first establishment request to an access network device or a core network device, wherein the first establishment request carries a service requirement of a to-be-established service, and the service requirement of the to-be-established service is used to indicate, to the access network device or the core network device, radio channel quality required by user equipment UE for executing the to-be-established service; and
a receiver, further configured to receive a first establishment response sent by the access network device or the core network device, wherein the first establishment response is used to notify the service application server that radio channel quality of a first cell of a first network in which the UE is located does not meet the service requirement of the to-be-established service; or
a receiver, configured to receive a second establishment response sent by the access network device or the core network device, wherein the second establishment response is used to notify the service application server that radio channel quality of a first cell of a first network in which the UE is located does not meet the service requirement of the to-be-established service and that a second cell or a third cell whose radio channel quality meets the service requirement of the to-be-established service does not exist, wherein the second cell is located in the first network, and the third cell is located in a second network.

34. The service application server according to claim 33, further comprising:
a processor, configured to determine, before the transmitter sends the first establishment request to the access network device, the service requirement of the to-be-established service based on at least one of a mean opinion score MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, radio access technology RAT information of the first network, and bandwidth information of the to-be-established service; wherein
alternatively, the transmitter is further configured to send a first query request to a third-party network device, wherein the first query request carries at least one of a MOS requirement of the to-be-established service, the radio channel quality of the first cell, terminal type information of the UE, information about a carrier frequency accessed by the UE, location information of the UE, coding information of the to-be-established service, load information of the first cell, coding information recommended for use, RAT information of the first network, and bandwidth information of the to-be-established service; and
the receiver is further configured to receive the first query response sent by the third-party network device, wherein the first query response carries the service requirement of the to-be-established service.

35. The service application server according to claim 33 or 34, wherein the service requirement of the to-be-established service comprises first instruction information, and the first instruction information is used to instruct the access network device to send the first establishment response to the first service application server when the radio channel quality of the first cell does not meet the service requirement of the to-be-established service.

36. The service application server according to claim 33 or 34, wherein the service requirement of the to-be-established service comprises second instruction information, and the second instruction information is used to instruct the access network device to hand over the UE to the second cell of the first network when the radio channel quality of the first cell does not meet the service requirement of the to-be-established service.

37. The service application server according to claim 33 or 34, wherein the service requirement of the to-be-established service comprises third instruction information, and the third instruction information is used to instruct the access network device to hand over the UE to the third cell of the second network when the radio channel quality of the first cell does not meet the service requirement of the to-be-established service.

38. The service application server according to any one of claims 33 to 37, wherein the first establishment response carries at least one of the radio channel quality of the first cell, the terminal type information of the UE, the information about the carrier frequency accessed by the UE, the location information of the UE, the load information of the first cell, the coding information recommended for use, the RAT information of the first network, and the bandwidth information of the to-be-established service.

39. The service application server according to any one of claims 34 to 38, wherein
after the receiver receives the first establishment response or the second establishment response sent by the access network device, the processor is further configured to determine an updated service requirement of the to-be-established service based on the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, wherein the coding information list of the UE comprises coding information supported by both the UE and the service application server; or
the transmitter is further configured to send a third query request to the third-party network device, wherein the third query request carries the MOS requirement of the to-be-established service, and at least one of the radio channel quality of the first cell, the terminal type information of the UE, the information about the carrier frequency accessed by the UE, the location information of the UE, the coding information of the to-be-established service, the load information of the first cell, the RAT information of the first network, the bandwidth information of the to-be-established service, and a coding information list of the UE that are carried in the first establishment response, wherein the coding information list of the UE comprises coding information supported by both the UE and the service application server; and
the receiver is further configured to receive the third query response sent by the third-party network device, wherein the first query response carries an updated service requirement of the to-be-established service.

40. The service application server according to claim 39, wherein after the updated service requirement of the to-be-established service is determined, the transmitter is further configured to send a second establishment request to the access network device or the core network device, wherein the second establishment request carries the updated service requirement of the to-be-established service.

41. A computer-readable storage medium, wherein the computer-readable storage medium stores one or more programs, the one or more programs comprise an instruction, and when a processor of the access network device executes the instruction, the access network device performs the service establishment method according to any one of claims 1 to 10.

42. A computer-readable storage medium, wherein the computer-readable storage medium stores one or more programs, the one or more programs comprise an instruction, and when a processor of the service application server executes the instruction, the service application server performs the service establishment method according to any one of claims 11 to 25.
